# EUROPEAN PATENT APPLICATION

(11) **EP 4 610 211 A1**
(43) Date of publication of application: **03.09.2025**
(21) Application number: 24159864.8
(22) Date of filing: 27.02.2024
(51) Int. Cl.: B66C 13/16, B60Q 1/50, B66C 15/06, B66C 23/42, B66C 23/90, B66C 13/48

(54) **CRANE, VEHICLE AND METHOD FOR A CRANE FOR CONTROLLING STATUS VISUALIZATION**

(71) Applicant: Palfinger AG, 5101 Bergheim (AT)
(72) Inventor: GSCHAIDER, Friedrich, 5112 Lamprechtshausen (AT); GANGL, Wilhelm, 5152 Dorfbeuern (AT); ESSL, Florian, 5440 Golling (AT); FISCHER, Rene, 5202 Neumarkt am Wallersee (AT)
(74) Representative: 2SPL Patentanwälte PartG mbB

(57) **Abstract**

Provided is a crane. The crane includes one or more lighting devices for visualizing a status of at least one of the crane and a vehicle holding the crane. The one or more lighting devices are mounted to the crane. The crane further includes visualization control circuitry configured to receive at least one of first sensor data of one or more sensors mounted to the crane and second sensor data of one or more sensors of the vehicle. The visualization control circuitry is additionally configured to control light emission by the one or more lighting devices based on the at least one of the first sensor data and the second sensor data.

## Description

### Field

The present disclosure relates to status visualization for cranes. In particular, examples of the present disclosure relate to a crane, a vehicle comprising the crane and a method for a crane for controlling status visualization.

### Background

A crane provides various pieces of information for an operator of the crane. When information is presented to the operator at a radio remote control for the crane, the operator is required to look at the radio remote control from time to time. In other words, the operator is required to divert his/her attention between the crane and a radio remote control. This inherent need for alternating focus between the crane and the remote control not only may compromise safety of the crane operation by limiting the operator's continuous observation of the crane but may also introduce operational inconveniences.

Hence, there may be a demand for improved status visualization.

### Summary

This demand is met by a crane, a vehicle, a method for a crane for controlling status visualization, a non-transitory machine-readable medium and a program in accordance with the independent claims. Advantageous embodiments are defined by the dependent claims.

According to a first aspect, the present disclosure provides a crane. The crane comprises one or more lighting devices for visualizing a status of at least one of the crane and a vehicle holding the crane. The one or more lighting devices are mounted to the crane. The crane further comprises visualization control circuitry configured to receive at least one of first sensor data of one or more sensors mounted to the crane and second sensor data of one or more sensors of the vehicle. The visualization control circuitry is additionally configured to control light emission by the one or more lighting devices based on the at least one of the first sensor data and the second sensor data.

According to a second aspect, the present disclosure provides a vehicle having mounted thereon a crane according to the first aspect.

According to a third aspect, the present disclosure provides a method for a crane for controlling status visualization. The method comprises receiving at least one of first sensor data of one or more sensors mounted to the crane and second sensor data of one or more sensors of a vehicle holding the crane. One or more lighting devices for visualizing a status of at least one of the crane and the vehicle are mounted to the crane. The method further comprises controlling light emission by the one or more lighting devices based on the at least one of the first sensor data and the second sensor data.

According to a fourth aspect, the present disclosure provides a non-transitory machine-readable medium having stored thereon a program having a program code for performing the method according to the third aspect, when the program is executed on a processor or a programmable hardware.

According to a fifth aspect, the present disclosure provides a program having a program code for performing the method according to the third aspect, when the program is executed on a processor or a programmable hardware.

As the status of the crane and/or the vehicle holding the crane is visualized via the one or more lighting devices mounted to the crane, an operator of the crane is not necessitated to shift focus away from the crane. This may allow increased safety of the crane operation as the operator may continuously observe the crane. Furthermore, operation convenience may be increased as the operator is not required to divert his/her attention between the crane and a separate device for status indication (such as a radio remote control).

### Brief description of the Figures

Some examples of apparatuses and/or methods will be described in the following by way of example only, and with reference to the accompanying figures, in which
Fig. 1 illustrates an exemplary a crane;
Fig. 2 illustrates a first exemplary lighting device;
Fig. 3 illustrates a second exemplary lighting device;
Fig. 4 illustrates a third exemplary lighting device;
Fig. 5 illustrates an exemplary vehicle having mounted thereon a crane; and
Fig. 6 illustrates a flowchart of an example of a method for a crane for controlling status visualization.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

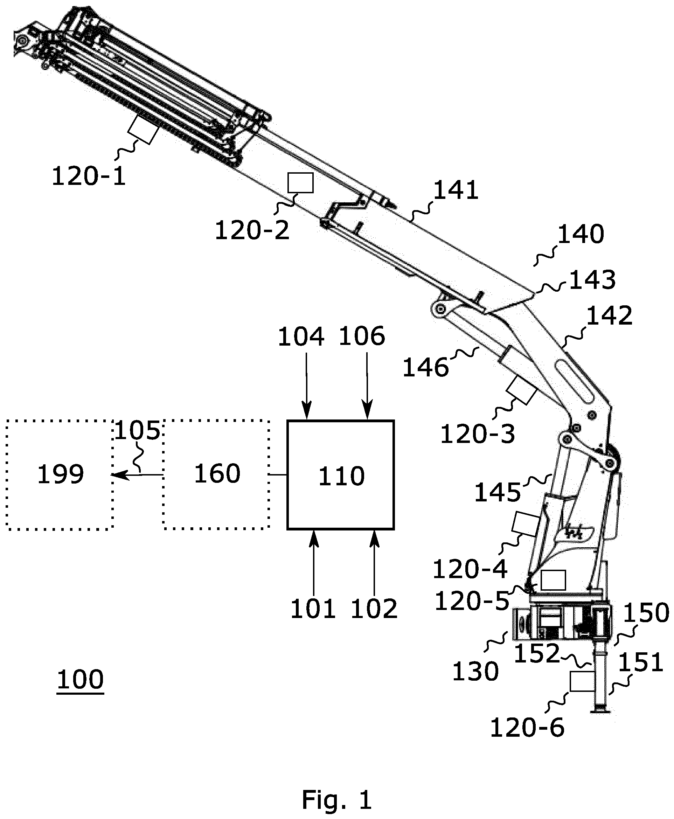

**Fig. 1** schematically illustrates a crane 100. The crane 100 is a knuckle boom crane such as a loader crane for loading and unloading goods (loads) onto and from trucks and other vehicles. The crane 100 comprise a (crane) base 130 and a boom (crane arm) 140. The base 130 serves as a mounting platform for the boom 140 and allows to mount the crane 100 to a vehicle such as a truck.

The boom 140 is mounted to the base 130 and is movable relative to the base 130 via a hydraulic cylinder 145, which is coupled to both the base 130 and the boom 140. The boom 140 comprises segments 141 and 142 connected to each other by a joint 143. The segments 141 and 142 are movable relative to each other via another hydraulic cylinder 146, which is coupled to both segments 141 and 142. In the example of Fig. 1, the boom 140 comprises two segments. However, the present disclosure is not limited thereto. In general, the boom 140 may comprise any number N > 2 of segments that are connected by joints and are movable relative each other. The segment 141 is extendable. That is, the segment 141 comprises multiple sections that can be selectively extended or retracted (e.g., by a hydraulic system of the boom 140) to adjust the length and, hence, the reach of the segment 141. In other words, the boom or crane arm 140 is an extendable (telescopic) boom or crane arm. It is to be noted that the present disclosure is not limited to extendable crane arms, alternative examples may comprise non-extendable booms or crane arms.

Further illustrated in Fig. 1 is an outrigger (crane leg) 150 of the crane 100 for selectively supporting the crane 100 against the ground. The outrigger 150 is mounted to the base 130. For example, the outrigger 150 may be extendable from the base 130 (e.g., manually, electrically or hydraulically). The outrigger 150 comprises a vertical telescopic leg (stabilizer leg, support leg, vertical telescopic sub-structure) 151 for selectively supporting the crane 100 against the ground. The outrigger 150 comprises a hydraulic support cylinder 152 for adjusting a length of the telescopic leg 151 and for adjusting a pressure with which the crane 100 is supported against the ground. The hydraulic support cylinder 152 may be integrated into the telescopic leg 151. The crane 100 may comprise one or more respective outrigger such as the outrigger 150 illustrated in Fig. 1 on both lateral sides of the base 130.

The proposed technology for status visualization will be explained in the following with reference to the crane 100. However, as will become evident from the following description, the type of crane or structure of the crane is not relevant for the proposed technology for status visualization. The proposed technology for status visualization may, in general, be used for any type of crane and any structure of the crane.

The crane 100 comprise lighting devices 120-1, ..., 120-6 for visualizing a status of at least one of the crane 100 and a vehicle (e.g., a truck; not illustrated in Fig. 1) holding the crane 100 (having mounted thereon the crane 100). The lighting devices 120-1, ..., 120-6 are mounted on the outside of the crane 100 such that the lighting devices 120-1, ..., 120-6 are visible for the operator of the crane 100 while the operator is present in the environment of the crane 100. In the example of Fig. 1, the crane 100 comprises six lighting devices. However, the present disclosure is not limited thereto. In general, the crane 100 may comprise any number M > 1 of lighting devices. The lighting devices may be mounted to any element (part) of the crane 100. In particular, different lighting devices may be mounted to different elements of the crane 100 as illustrated in Fig. 1. The lighting devices 120-1, ..., 120-6 are devices configured to emit light. The lighting devices 120-1, ..., 120-6 may be identical to or different from each other (e.g., in terms of form, size, lighting technology, characteristics of the emitted or emittable light).

The status of the crane 100 refers to the (current) condition or operational state of the crane 100. The status of the crane 100 may encompass various parameters and information related to the functioning of the crane 100. Selected statuses of the crane 100 will be described below. However, it is to be noted that the present disclosure is not limited to the below described statuses of the crane 100.

Similarly, the status of the vehicle holding the crane refers to the (current) condition or operational state of the vehicle. The status of the vehicle may encompass various parameters and information related to the functioning of the vehicle. Selected statuses of the vehicle will be described below. However, it is to be noted that the present disclosure is not limited to the below described statuses of the vehicle.

Visualization control circuitry 110 is coupled (e.g., wirelessly or wired) to the lighting devices 120-1, ..., 120-6 for controlling light emission by the lighting devices 120-1, ..., 120-6. For example, the visualization control circuitry 110 may be a single dedicated processor, a single shared processor, or a plurality of individual processors, some of which or all of which may be shared, a digital signal processor (DSP) hardware, an application specific integrated circuit (ASIC), a system-on-a-chip (SOC), a neuromorphic processor or a field programmable gate array (FPGA). The visualization control circuitry 110 may optionally be coupled to, e.g., memory such as read only memory (ROM) for storing software, random access memory (RAM) and/or non-volatile memory. For example, the crane 100 may comprise memory configured to store instructions, which when executed by the visualization control circuitry 110, cause the visualization control circuitry 110 to perform the steps and methods described herein.

The crane 100 holds the visualization control circuitry 110. In other words, the visualization control circuitry 110 is mounted to a further element of the crane and is an integral part of the crane 100. The visualization control circuitry 110 may, e.g., be integrated into (mounted to) the base 130 or the boom 140. For example, the visualization control circuitry 110 may be integrated into control circuitry (not illustrated in Fig. 1) of the crane 100 for controlling operation of the boom or crane arm 140 (e.g., adjustment of the position of the boom 140). In other examples, the visualization control circuitry 110 may be provided separate from the control circuitry.

The visualization control circuitry 110 is configured to receive at least one of first sensor data 101 of one or more sensors (not illustrated in Fig. 1) mounted to the crane 100 and second sensor data 102 of one or more sensors of a vehicle (e.g., a truck; not illustrated in Fig. 1) holding the crane 100 (having mounted thereon the crane 100). The first sensor data 101 are indicative of (encoded with information about) one or more physical quantities measured by the one or more sensors mounted to the crane 100 and/or or one or more quantities or statuses (states) derived by the one or more sensors mounted to the crane 100 from measured physical quantities. Similarly, the second sensor data 102 are indicative of (encoded with information about) one or more physical quantities measured by the one or more sensors mounted to the vehicle and/or or one or more quantities or statuses (states) derived by the one or more sensors mounted to the vehicle from measured physical quantities. The visualization control circuitry 110 may be coupled to all or part of the one or more sensors mounted to the crane 100 and the one or more sensors of the vehicle. Additionally or alternatively, the visualization control circuitry 110 may receive the first sensor data 101 and/or the second sensor data 102 from at least one of a memory of the crane 100 (e.g., a buffer memory) and a memory of the vehicle (e.g., a buffer memory).

The one or more sensors mounted to the crane 100 may be manifold. For example, the one or more sensors mounted to the crane 100 may comprise or be one or more of an angle sensor, a pressure sensor, a force sensor, a length measurement sensor and an optical sensor. However, it is to be noted that the present disclosure is not limited to the foregoing examples. One or more additional or alternative sensors may be used as well.

Similarly, the one or more sensors of the vehicle may be manifold. For example, the one or more sensors of the vehicle may measure one or more of a battery status or level of the vehicle, a fuel status or level of the vehicle, an axle load of the vehicle and an inclination (e.g., a carrier inclination) of the vehicle. However, it is to be noted that the present disclosure is not limited to the foregoing examples. One or more additional or alternative sensors may be used instead or additionally.

The visualization control circuitry 110 is further configured to control the light emission by the one or more lighting devices 120-1, ..., 120-6 based on the at least one of the first sensor data 101 and the second sensor data 102. In other words, the visualization control circuitry 110 is configured to process the first sensor data 101 and/or the second sensor data 102 to control the light emission by the one or more lighting devices 120-1, ..., 120-6 for visualizing the status of at least one of the crane 100 and the vehicle. The status of the crane 100 and/or the vehicle holding the crane 100 may be visualized in various ways. For example, the visualization control circuitry 110 may control one or more of the lighting devices 120-1, ..., 120-6 to emit light of one or more predefined light colors and/or control one or more of the lighting devices 120-1, ..., 120-6 to emit light according to one or more predefined light patterns (e.g., blinking patterns) and/or control one or more of the light emitting devices 120-1, ..., 120-6 to activate specific ones of their plurality of selectively activatable light emitters (e.g., light-emitting diodes or light bulbs). According to examples, the visualization control circuitry 110 may control one or more of the lighting devices 120-1, ..., 120-6 to activate one or more specific (predefined) groups of their selectively activatable light emitters (wherein a group comprises one or more of the selectively activatable light emitters) such as one or more of a first, a second and a third group of light emitters for visualizing the status of at least one of the crane 100 and the vehicle. However, the present disclosure is not limited to the foregoing examples. Other types of light emission control may be used instead or additionally.

As the status of the crane 100 and/or the vehicle holding the crane 100 is visualized via the one or more lighting devices 120-1, ..., 120-6 mounted to the crane 100, an operator of the crane is not necessitated to shift focus away from the crane 100. This may allow increased safety of the crane operation as the operator may continuously observe the crane 100. Furthermore, operation convenience may be increased as the operator is not required to divert his/her attention between the crane 100 and a separate device for status indication such as a remote control 199 for operating the crane 100.

The remote control 199 is a device for an operator of the crane 100 for controlling the crane 100 from a distance. The remote control 100 may be coupled wirelessly or wired to the crane 100. The remote control 199 receives a user input at a human-machine interface thereof (e.g., one or more of a joystick, a button, a touch-sensitive display, a microphone) and comprises circuitry for converting the user input into a command for the crane. The remote control 100 further comprises circuitry for transmitting the command to the crane (e.g., wirelessly or wired). The control circuitry of the crane 100 receives the command and controls the crane 100 to perform an according (corresponding) action. For example, the operator may control or adjust the position of the boom 140 via one or more user inputs, rotate the boom 140 relative to the base 130 via one or more user inputs, control the boom 140 to (e.g., automatically or autonomously) unfold via one or more user inputs, control the boom 140 to (e.g., automatically or autonomously) fold via one or more user inputs, control the boom 140 to extend via one or more user inputs, control winding and unwinding of a rope from an optional rope winch (not illustrated in Fig. 1) of the crane 100 via one or more user inputs, control extension and retraction of the outrigger(s) 150 via one or more user inputs.

Optionally, the remote control 199 may further be used for outputting the status of the crane 100 and/or the status of the vehicle to the operator. For example, the crane 100 may further comprise interface circuitry 160 coupled to the visualization control circuitry 110. The interface circuitry 160 may be identical to or be different from interface circuitry of the crane for receiving the commands from the remote control 199. The interface circuitry 160 is configured to transmit (e.g., wirelessly or wired) visualization status data 105 indicating at least one of a status of the light emission by the one or more lighting devices 120-1, ..., 120-6 and a variation thereof to the remote control 199 of the crane 100. Accordingly, the remote control 199 may indicate the status of the crane 100 and/or the vehicle holding the crane to the operator. For example, the remote control 199 may control light emission by one or more status lights of the remote control 199 based on the visualization status data 105 to indicate the status of the crane 100 and/or the vehicle holding the crane to the operator. Similarly, in case the remote control 199 comprises a display for outputting a graphical user interface, the remote control 199 may comprise circuitry for controlling the display to output graphical elements and/or textual elements as part of the graphical user interface based on the visualization status data 105 to indicate the status of the crane 100 and/or the vehicle holding the crane to the operator. Accordingly, the operator may additionally be informed by the remote control 199 about the status of the crane 100 and/or the vehicle holding the crane. Thus, even during times when the operator is focusing on the remote control 199 rather than on the crane 100 itself, the operator may be informed about the status of the crane 100 and/or the vehicle holding the crane.

As described above, the visualization control circuitry 110 controls the light emission by the one or more lighting devices 120-1, ..., 120-6 based on the at least one of the first sensor data 101 and the second sensor data 102. For example, if the first sensor data 101 is received by the visualization control circuitry 110, the visualization control circuitry 110 may be configured to determine a status of a component of the crane 100 based on the first sensor data 101. The component of the crane 100 may, in general, be any element or substructure of the crane 100. The status of the crane 100's component refers to the (current) condition or operational state of the crane 100's component. For example, if the first sensor data 101 indicate a (hydraulic) pressure at the hydraulic cylinder 145, the status of the crane 100's component may be a level of utilization of the boom 140 (e.g., 90 % or 100 % utilization level is reached). Similarly, if the first sensor data 101 indicate the extension of an extendable segment 141 of the boom 140, the status of the crane 100's component may be the level or degree of extension of the boom 140 or of the remaining extension of the boom 140. The foregoing examples for statuses of components of the crane 100 are selected for illustrative purposes only. The present disclosure is not limited thereto. Further examples will be described below.

The visualization control circuitry 110 may further be configured to select at least one of the one or more lighting devices 120-1, ..., 120-6 for visualizing the status of the component. In particular, the selected at least one of the one or more lighting devices 120-1, ..., 120-6 may be mounted to or in close proximity of the component whose status it visualizes. For example, one or both of the lighting devices 120-1 and 120-2 may be selected to visualize the status of the extendable segment 141 or the boom 140. Similarly, the lighting device 120-3 may be selected to visualize the status of hydraulic cylinder 146 and/or the lighting device 120-4 may be selected to visualize the status of hydraulic cylinder 145. For example, the lighting device 120-5 may be selected to visualize the status of the base 130. Analogously, the lighting device 120-6 may be selected to visualize the status of the outrigger 150 and/or the hydraulic support cylinder 152. Selecting a lighting device mounted to or in close proximity of the component whose status it visualizes may be advantageous as the operator may intuitively associate the visualized status to the component the selected lighting device is mounted to or the component in close proximity to the selected lighting device.

The visualization control circuitry 110 may further be configured to control the light emission of at least one of the one or more selected lighting devices to indicate the status of the crane 100's component. For example, for indicating the utilization of the boom 140, the visualization control circuitry 110 may control the one or both of the lighting devices 120-3 and 120-4 to emit light of predefined light colors and/or light patterns depending on the determined utilization of the boom 140 (e.g., green light and/or a first blinking frequency for a utilization level of less than 50 %, yellow light and/or a second blinking frequency for a utilization level between 50 % and 95 % and red light and/or a third blinking frequency for a utilization level above 95 %). Similarly, for indicating the level of extension of the boom 140 or the remaining extension of the boom 140, the visualization control circuitry 110 control the lighting device 120-1 to emit light of predefined light colors and/or light patterns depending on the determined extension or the determined remaining extension of the boom 140 (e.g., green light and/or a first blinking frequency for an extension of less than 70 % of a maximum extension, yellow light and/or a second blinking frequency for an extension between 70 % and 95 % of the maximum extension and red light and/or a third blinking frequency for an extension of more than 95 % of the maximum extension). The foregoing examples for visualization of the status of the crane 100's component are selected for illustrative purposes only. The present disclosure is not limited thereto. Further examples will be described below.

Similarly, if the second sensor data 102 is received by the visualization control circuitry 110, the visualization control circuitry 110 may be configured to determine a status of a component of the vehicle holding the crane based on the second sensor data 102 and control visualization of the status of the vehicle's component.

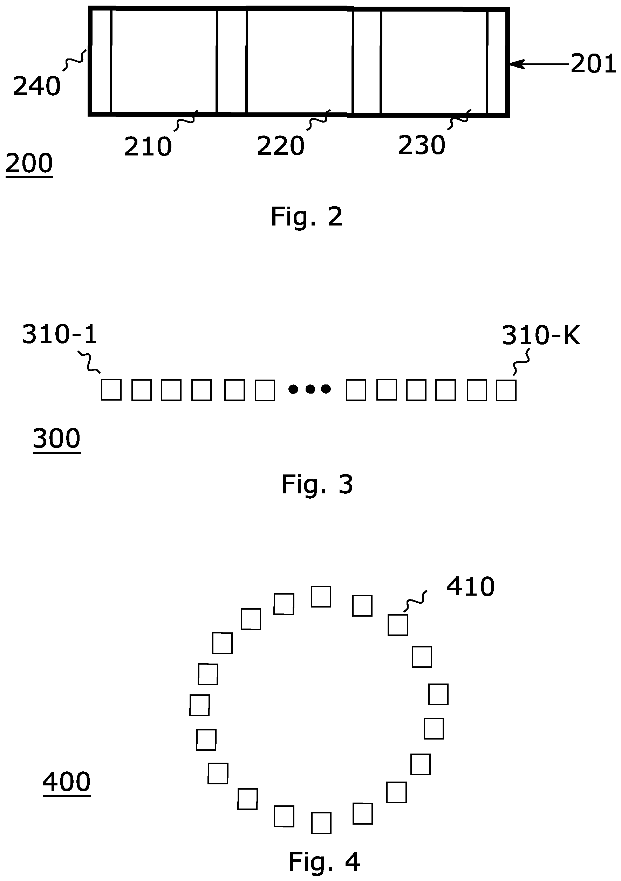

As described above, various types of lighting device may be used for status visualization. In the following, a few exemplary lighting devices will be described with reference to Figs. 2 to 4. However, it is to be noted that the present technology is not limited to usage of the lighting devices described in the following. Other lighting devices may be used instead or additionally.

An exemplary lighting device 200 for visualizing the status of the crane 100 or a vehicle holding the crane 100 is illustrated in **Fig. 2****.** The lighting device 200 comprises three light emitters 210, 220 and 230 arranged in a housing 240. Each of the light emitters 210, 220 and 230 is configured to emit light of a different light color. For example, each of the 210, 220 and 230 may be configured to emit a different one of green, yellow and red light. The light emitters 210, 220 and 230 may be activated selectively based on an input signal 201. Accordingly, the lighting device 200 is able to visualize at least three different statuses via the different light colors. It is to be noted that the present disclosure is not limited to using three light emitters 210, 220 and 230 for three different light colors. Any number L ≥ 2 of light emitters emitting light of a different light colors may be used.

For example, the visualization control circuitry 110 may generate the input signal 201 according to the determined status of the crane 100 or a vehicle holding the crane 100 that is to be visualized. Based on the input signal 201, the lighting device 200 selectively emits light of the selected light color via one of the light emitters 210, 220 and 230 such that the operator of the crane 100 may recognize the status of the crane 100 or the vehicle. Similarly, the visualization control circuitry 110 may generate the input signal 201 to control the lighting device 200 to activate two or more of the light emitters 210, 220 and 230 (in parallel, at the same time) for visualizing a determined status of the crane 100 or the vehicle.

In other examples, instead of a single lighting device that is able to emit light of different light colors (such as the lighting device 200), a plurality of separate lighting devices, which are each configured to emit light of a single different light color, may be mounted to the crane 100 and be arranged next to each other for visualizing a determined status of the crane 100 or the vehicle. For example, the visualization control circuitry 110 may selective activate one or more of the plurality of separate lighting devices such that the activated lighting device(s) emit(s) light of one or more selected light colors. Accordingly, the operator of the crane 100 may recognize the status of the crane 100 or the vehicle.

In still other examples, visualization control circuitry 110 may control a respective blinking frequency of the light emitted by one or more selected lighting devices for visualizing a determined status of the crane 100 or a vehicle holding the crane 100. Different blinking frequencies may be adjusted by the visualization control circuitry 110 for visualizing different statuses of the crane 100 or the vehicle, a component thereof or the vehicle. For example, a first blinking frequency may be used for visualizing a first status of the crane 100 or the vehicle, a different second blinking frequency (e.g., higher or lower than the first blinking frequency) may be used for visualizing a second status of the crane 100 or the vehicle, etc.

An exemplary lighting device 300 for visualizing the status of the crane 100 or a vehicle holding the crane 100 is illustrated in **Fig. 3****.** The lighting device 300 comprises a plurality of selectively activatable light emitters 310-1, ..., 310-K with K ≥ 2 (e.g., K may be 10 or more, 20 or more, 50 or more or 100 or more). In other words, each of the plurality light emitters 310-1, ..., 310-K is activatable individually. For example, the lighting device 300 may be configured to activate successive ones of the light emitters 310-1, ..., 310-K (a sequence of the light emitters among the light emitters 310-1, ..., 310-K) based on an input signal received by the lighting device 300. The number of activated light emitters depends on number of light emitters to be active indicated by (encoded to) the input signal. For example, depending on the number of light emitters to be active, a first group, a second group or a third group of succeeding light emitters among the light emitters 310-1, ..., 310-K may be activated.

The plurality light emitters 310-1, ..., 310-K are linearly arranged one after another along a spatial direction (along the horizontal direction) in the example of Fig. 3. However, the present disclosure is not limited to a linear arrangement along a spatial direction. **Fig. 4** illustrates an alternative lighting device 400. The lighting device 300 comprises a plurality of selectively activatable light emitters 410. The (total) number of light emitters 410 may, e.g., be 10 or more, 20 or more, 50 or more or 100 or more. In comparison to the lighting device 300, the plurality of selectively activatable light emitters 410 of the lighting device 400 are arranged one after another in a circular arrangement. Like the lighting device 300, the lighting device 400 may be configured to activate successive ones of the light emitters 410 based on an input signal received by the lighting device 400. The number of activated light emitters depends on number of light emitters to be active indicated by (encoded to) the input signal.

For example, the visualization control circuitry 110 may generate the input signal for the respective one of the lighting device 300 and the lighting device 400 according to the determined status of the crane 100 or a vehicle holding the crane 100 that is to be visualized. Based on the input signal, the lighting device 300 selectively activates successive ones of the light emitters 310-1, ..., 310-K or the lighting device 400 selectively activate successive ones of the light emitters 410 such that the operator of the crane 100 may recognize the status of the crane 100 or the vehicle.

According to examples of the present disclosure, the light color of the light emitted by the respective one of the light emitters 310-1, ..., 310-K and the light emitters 410 may change depending on the number of activated light emitters. For example, the light emitters 310-1, ..., 310-K or 410 may be configured to emit light of a first light color (e.g., green) if a first share of the light emitters 3 10-1, ..., 310-K or 410 is activated, emit light of a different second light color (e.g., yellow) if a second share of the light emitters 310-1, ..., 310-K or 410 is activated and emit light of a different third light color (e.g., red) if a third share of the light emitters 310-1, ..., 310-K or 410 is activated. The share ratio may, e.g., be smaller than the second share and the second share may be smaller than the third share. For example, the first share may be 50 % or less, the second share may be greater than the share ratio and be less than 95 % (or less) and the third share may be greater than the second share. Changing the color depending on the share of activated light emitters may allow to improve the status visualization.

As mentioned above, various statuses of the crane 100 and/or a vehicle holding the crane 100 may be visualized according to the proposed technology. In the following, the visualization of exemplary statuses will be described in greater detail with reference to Fig. 1.

As described above, the crane arm or boom 140 is an extendable crane arm or boom. The extension of the crane arm or boom 140 (in particular, the extension of the extendable segment 141) may be measured via one or more sensors mounted to the crane arm or boom 140. Sensors and measurement techniques for measuring the extension of a crane arm or boom are generally known to a person skilled in the art. Hence, description of such sensors and measurement techniques will be omitted in the present disclosure. As a result of the measurement, the first sensor data 101 received by the visualization control circuitry 110 may indicate the extension of the crane arm or boom 140 (in particular, the extension of the extendable segment 141). Accordingly, the visualization control circuitry 110 is configured to control the light emission of at least one of the one or more lighting devices 120-1, ..., 120-6 to indicate the extension of the crane arm or boom 140 or a remaining extension of the crane arm or boom 140 (i.e., the length that can still be extended or protruded beyond the current configuration of the crane arm or boom 140, in particular the current configuration of the extendable segment 141). The visualization control circuitry 110 may be configured to determine the remaining extension of the crane arm or boom 140 based on a difference between a maximum extension of the crane arm or boom 140 (in particular, the maximum extension of the extendable segment 141) and the (current) extension of the crane arm or boom 140 (in particular, the extension of the extendable segment 141) indicated by the first sensor data 101.

For example, the visualization control circuitry 110 may select the lighting device 120-1 and control the light emission of the lighting device 120-1 to indicate the extension of the crane arm or boom 140 or the remaining extension of the crane arm or boom 140. The lighting device 120-1 visualizes the status of the crane arm or boom 140 (in particular, the extendable segment 141) and is mounted to the extendable segment 141. Accordingly, the operator of the crane 100 may intuitively associate the status visualized by the lighting device 120-1 to the crane arm or boom 140 (in particular, the extendable segment 141). In other examples, the lighting device 120-2 may be selected instead of the lighting device 120-1.

The extension of the crane arm or boom 140 or the remaining extension of the crane arm or boom 140 may be visualized in various ways. Two non-limiting examples will be given in the following.

For example, the visualization control circuitry 110 may control the at least one of the one or more lighting devices 120-1, ..., 120-6 (e.g., the lighting device 120-1) to emit light with a light color selected based on the one of the extension of the crane arm and the remaining extension of the crane arm. For example, the visualization control circuitry 110 may control the lighting device 120-1 to emit green light for an extension of less than 70 % of the maximum extension, yellow light for an extension between 70 % and 95 % of the maximum extension and red light for an extension of more than 95 % of the maximum extension. The foregoing values are selected for illustrative purposes only - other values may be used instead. The lighting device 200 described above with reference to Fig. 2 may be used for the lighting device 120-1.

In other examples, the visualization control circuitry 110 may control, based on the one of the extension of the crane arm or boom 140 and the remaining extension of the crane arm or boom 140, a lighting device of the one or more lighting devices 120-1, ..., 120-6 (e.g., the lighting device 120-1) with a plurality of selectively activatable light emitters to activate a number of successive ones of the light emitters. The plurality of light emitters are arranged one after another. The number of activated light emitters depends on the one of the extension of the crane arm or boom 140 and the remaining extension of the crane arm or boom 140. For example, the ratio of activated light emitters to the total number of activatable light emitters may correspond to (be equal to) the ratio of the extension of the crane arm or boom 140 to the maximum extension of the crane arm or boom 140. Similarly, the ratio of activated light emitters to the total number of activatable light emitters may correspond to (be equal to) the ratio of the remaining extension of the crane arm or boom 140 to the maximum extension of the crane arm or boom 140. One of the lighting device 300 and 400 described above with reference to Fig. 3 and Fig. 4 may, e.g., be used for the lighting device 120-1 and the visualization control circuitry 110 may control the lighting device 120-1 to activate a number of successive ones of the light emitters 310-1, ... 310-K or 410. The number of activated light emitters 310-1, ... 310-K or 410 depends on the one of the extension of the crane arm or boom 140 and the remaining extension of the crane arm or boom 140 - analogously to what is described above.

As described above, the crane 100 comprises one or more hydraulic cylinders such as the hydraulic cylinders 145 and 146 for moving the crane arm or boom 140 or a segment thereof. The pressure at the respective hydraulic cylinder may be measured via one or more sensors mounted to or included in the hydraulic cylinder. Sensors and measurement techniques for measuring the pressure at a hydraulic cylinder are generally known to a person skilled in the art. Hence, description of such sensors and measurement techniques will be omitted in the present disclosure. As a result of the measurement, the first sensor data 101 received by the visualization control circuitry 110 may indicate the pressure at a hydraulic cylinder such as one of the hydraulic cylinders 145 and 146. Accordingly, the visualization control circuitry 110 is configured to control the light emission of at least one of the one or more lighting devices 120-1, ..., 120-6 to indicate the pressure at the hydraulic cylinder

For example, the visualization control circuitry 110 may select the lighting device 120-3 and control the light emission of the lighting device 120-3 to indicate the pressure at the hydraulic cylinder 146. The lighting device 120-3 visualizes the status of the hydraulic cylinder 146 and is mounted to the hydraulic cylinder 146. Accordingly, the operator of the crane 100 may intuitively associate the status visualized by the lighting device 120-3 to the hydraulic cylinder 146. Similarly, the visualization control circuitry 110 may select the lighting device 120-4 and control the light emission of the lighting device 120-4 to indicate the pressure at the hydraulic cylinder 145. The lighting device 120-4 visualizes the status of the hydraulic cylinder 145 and is mounted to the hydraulic cylinder 145. Accordingly, the operator of the crane 100 may intuitively associate the status visualized by the lighting device 120-4 to the hydraulic cylinder 145.

The pressure at a hydraulic cylinder such as one of the hydraulic cylinders 145 and 146 may be visualized in various ways. Two non-limiting examples will be given in the following.

For example, the visualization control circuitry 110 may control the at least one of the one or more lighting devices 120-1, ..., 120-6 (e.g., one of the lighting devices 120-3 and 120-4) to emit light with a light color selected based on the pressure at the hydraulic cylinder. For example, the visualization control circuitry 110 may control the lighting device 120-3 to emit green light for pressure at the hydraulic cylinder 146 of less than 70 % of the maximum (allowed, supported) pressure, yellow light for an extension between 70 % and 95 % of the maximum pressure and red light for an extension of more than 95 % of the maximum pressure. The foregoing values are selected for illustrative purposes only - other values may be used instead. The lighting device 200 described above with reference to Fig. 2 may be used for the lighting device 120-4. The lighting device 120-3 may be analogously selected and controlled by the visualization control circuitry 110 to visualize the pressure at the hydraulic cylinder 145.

In other examples, the visualization control circuitry 110 may control, based on the pressure at the hydraulic cylinder, a lighting device of the one or more lighting devices 120-1, ..., 120-6 (e.g., one of the lighting devices 120-3 and 120-4) with a plurality of selectively activatable light emitters to activate a number of successive ones of the light emitters. The plurality of light emitters are arranged one after another. The number of activated light emitters depends on the pressure at the hydraulic cylinder. For example, the ratio of activated light emitters to the total number of activatable light emitters may correspond to (be equal to) the ratio of the pressure at the hydraulic cylinder to the maximum pressure at the hydraulic cylinder. One of the lighting devices 300 and 400 described above with reference to Fig. 3 and Fig. 4 may, e.g., be used for the lighting device 120-3 and the visualization control circuitry 110 may control the lighting device 120-3 to activate a number of successive ones of the light emitters 310-1, ... 310-K or 410. The number of activated light emitters 310-1, ... 310-K or 410 depends on the pressure at the hydraulic cylinder 146 - analogously to what is described above. Similarly, one of the lighting devices 300 and 400 may be used for the lighting device 120-4 and the visualization control circuitry 110 may control the lighting device 120-4 to activate a number of successive ones of the light emitters 310-1, ... 310-K or 410. The number of activated light emitters 310-1, ... 310-K or 410 depends on the pressure at the hydraulic cylinder 145.

Also the pressure at the pressure at the hydraulic support cylinder 152 of the outrigger or support leg 150 may be measured and visualized. Accordingly, the first sensor data 101 received by the visualization control circuitry 110 may indicate a pressure at the hydraulic support cylinder 152. Accordingly, the visualization control circuitry 110 is configured to control the light emission of at least one of the one or more lighting devices 120-1, ..., 120-6 to indicate the pressure at the hydraulic support cylinder 152.

For example, the visualization control circuitry 110 may select the lighting device 120-6 and control the light emission of the lighting device 120-6 to indicate the pressure at the hydraulic support cylinder 152. The lighting device 120-6 visualizes the status of the hydraulic support cylinder 152 and is mounted to the telescopic leg 151 of the outrigger or crane leg 150. Accordingly, the operator of the crane 100 may intuitively associate the status visualized by the lighting device 120-6 to the hydraulic support cylinder 152.

The pressure at the hydraulic support cylinder 152 may be visualized in various ways. Two non-limiting examples will be given in the following.

For example, the visualization control circuitry 110 may control the at least one of the one or more lighting devices 120-1, ..., 120-6 (e.g., the lighting device 120-6) to emit light with a light color selected based on the pressure at the hydraulic support cylinder 152. For example, the visualization control circuitry 110 may control the lighting device 120-6 to emit green light for pressure at the hydraulic support cylinder 152 of less than 70 % of the maximum (allowed, supported) pressure, yellow light for an extension between 70 % and 95 % of the maximum pressure and red light for an extension of more than 95 % of the maximum pressure. The foregoing values are selected for illustrative purposes only - other values may be used instead. The lighting device 200 described above with reference to Fig. 2 may be used for the lighting device 120-6.

In other examples, the visualization control circuitry 110 may control, based on the pressure at the hydraulic support cylinder 152, a lighting device of the one or more lighting devices 120-1, ..., 120-6 (e.g., the lighting device 120-6) with a plurality of selectively activatable light emitters to activate a number of successive ones of the light emitters. The plurality of light emitters are arranged one after another. The number of activated light emitters depends on the pressure at the hydraulic support cylinder 152. For example, the ratio of activated light emitters to the total number of activatable light emitters may correspond to (be equal to) the ratio of the pressure at the hydraulic support cylinder 152 to the maximum pressure at the hydraulic support cylinder 152. One of the lighting devices 300 and 400 described above with reference to Fig. 3 and Fig. 4 may, e.g., be used for the lighting device 120-6 and the visualization control circuitry 110 may control the lighting device 120-6 to activate a number of successive ones of the light emitters 310-1, ... 310-K or 410. The number of activated light emitters 310-1, ... 310-K or 410 depends on the pressure at the hydraulic support cylinder 152 - analogously to what is described above.

In addition to visualizing the pressure at the hydraulic support cylinder 152, additional information relating to the hydraulic support cylinder 152 may visualized. For example, visualization control circuitry 110 may be further configured to receive reference data 106 indicating a reference point for the pressure at the hydraulic support cylinder. The reference point may, e.g., a set point adjusted (set) by the operator (e.g., at the remote control 199) or the control circuitry of the crane. In other examples, the reference point may indicate a pressure limit or maximum pressure for the hydraulic support cylinder 152. The pressure limit or maximum pressure for the hydraulic support cylinder 152 may, e.g., correspond to a support force limit (limitation) for the outrigger or crane leg 150.

Accordingly, the visualization control circuitry 110 may be further configured to control, based on the reference data 106, the lighting device to activate one of a plurality of selectively activatable further light emitters. The plurality of further light emitters are arranged in parallel to the plurality of selectively activatable light emitters. In other words, the plurality of further light emitters are arranged on a curve that is parallel to the curve on which the plurality of selectively activatable light emitters are arranged. For example, the lighting device 300 described above may comprise a second plurality of selectively activatable light emitters linearly arranged in parallel to the light emitters 310-1, ... 310-K. The number of the further light emitters may be equal to or different from the number of the light emitters 310-1, ... 310-K. Similarly, the lighting device 400 described above may comprise a second plurality of selectively activatable light emitters arranged one after another in second a circular arrangement (e.g., such that the light emitters 410 and the further light emitters are arranged on concentric circular curves). The light color of the light emitted or emittable by the plurality of further light emitters may be different from the light color of the light emitted or emittable by the plurality of light emitters (colored light vs. white light) such that the operator may easily recognize the additionally visualized reference point. Independent of the specific geometric arrangement of the plurality of further light emitters, the position of the activated further light emitter along the extension of the plurality of further light emitters corresponds to the reference point for the pressure at the hydraulic support cylinder 152. For example, if the reference point indicates the pressure limit or maximum pressure for the hydraulic support cylinder 152, the position of the activated further light emitter along the extension of the plurality of further light emitters may be selected such that it is closest to the last activated light emitter among the plurality of activatable light emitters in case the pressure at the hydraulic support cylinder 152 would be equal to the pressure limit or maximum pressure for the hydraulic support cylinder 152. Similarly, if the reference point indicates a set point for the pressure at the hydraulic support cylinder 152, the position of the activated further light emitter along the extension of the plurality of further light emitters may be selected such that it is closest to the last activated light emitter among the plurality of activatable light emitters in case the pressure at the hydraulic support cylinder 152 would be equal to the pressure indicated by the set point.

In an analogous manner, additional information relating to the hydraulic cylinders 145 and 146 may visualized. For example, visualization control circuitry 110 may be further configured to receive reference data indicating a reference point for the pressure at one of the hydraulic cylinders 145 and 146 (e.g., a set point for the pressure or a pressure limit or maximum pressure). Accordingly, the visualization control circuitry 110 may be further configured to control, based on the reference data, the respective lighting device (e.g., one of the lighting devices 120-3 and 120-4) to activate one of a plurality of selectively activatable further light emitters. As described above, the position of the activated further light emitter along the extension of the plurality of further light emitters corresponds to the reference point for the pressure at the hydraulic cylinder 145 or 146.

In some example, the crane 100 or a vehicle holding the crane 100 may further support the detection of objects in the environment of the crane 100 or the vehicle. The presence of an object in a predetermined region of the crane's environment may be measured or detected via one or more sensors mounted to the crane 100 or the vehicle. Sensors and measurement techniques for measuring or detecting presence of an object in a predetermined region are generally known to a person skilled in the art. Hence, description of such sensors and measurement techniques will be omitted in the present disclosure. Accordingly, at least one of the first sensor data 101 and the second sensor data 102 may indicate presence of an object in a predetermined region of the crane 100's environment. The predetermined region of the crane 100's environment may, in general, be any region in the environment of the crane 100. For example, the predetermined region of the crane 100's environment may be a region below the boom or crane arm 140, the region on the base 130 next to the boom or crane arm 140, a (target) loading or unloading position, etc. The presence of an object such as a human being, an animal or any other physical entity may be relevant for the operator of the crane 100 as it may affect crane operation (e.g., crane operation needs to be stopped for safety reasons). Therefore, the visualization control circuitry 110 is configured to control the light emission of at least one of the one or more lighting devices 120-1, ..., 120-6 to indicate the presence of the object in the predetermined region of the crane 100's environment.

The presence of the object in the predetermined region of the crane 100's environment may be visualized in various ways. For example, the visualization control circuitry 110 may control the at least one of the one or more lighting devices 120-1, ..., 120-6 (e.g., one of the lighting devices 120-2 and 120-5) to emit light of a predefined light color in case the object is present in the predetermined region of the crane 100's environment. The predefine light color may be any color (e.g., blue or red). The visualization control circuitry 110 may, e.g., control the lighting device 120-2 to emit red or blue light if the object is present in the region below the boom or crane arm 140 (other light colors may be used instead). Similarly, the visualization control circuitry 110 may control the lighting device 120-5 to emit red light or blue light if the object is present on the base 130 next to the boom or crane arm 140. Additionally, the at least one of the one or more lighting devices 120-1, ..., 120-6 may be controlled to emit the light in a flashing manner (i.e., to emit a flashing light of a predefined light color) in case the object is present in the predetermined region of the crane 100's environment.

According to examples of the present disclosure, the crane 100 may support autonomous or automatic functions such as autonomous or automatic folding and/or unfolding of the boom or crane arm 140. For example, the visualization control circuitry 110 may be configured to receive operation status data 104 indicating execution of an autonomous or automatic function by the crane 100. The operation status data 104 may, e.g., be provided by the control circuitry of the crane 100. The execution of an autonomous or automatic function by the crane 100 is a relevant information for the operator of the crane 100 and also other people in the vicinity of the crane 100. Accordingly, the visualization control circuitry 110 is configured to control the light emission of at least one of the one or more lighting devices 120-1, ..., 120-6 to indicate the execution of the autonomous or automatic function by the crane 100.

The execution of the autonomous or automatic function by the crane 100 may be visualized in various ways. For example, the visualization control circuitry 110 may control the at least one of the one or more lighting devices 120-1, ..., 120-6 (e.g., one of the lighting devices 120-2 and 120-5) to emit light of a predefined light color while the crane 100 executes the autonomous or automatic function. The predefine light color may be any color (e.g., blue or red). The visualization control circuitry 110 may, e.g., control the lighting device 120-2 or the lighting device 120-5 to emit red or blue light while the crane 100 executes the autonomous or automatic function (other light colors may be used instead). Additionally, the at least one of the one or more lighting devices 120-1, ..., 120-6 may be controlled to emit the light in a flashing manner (i.e., to emit a flashing light of a predefined light color) while the crane 100 executes the autonomous or automatic function.

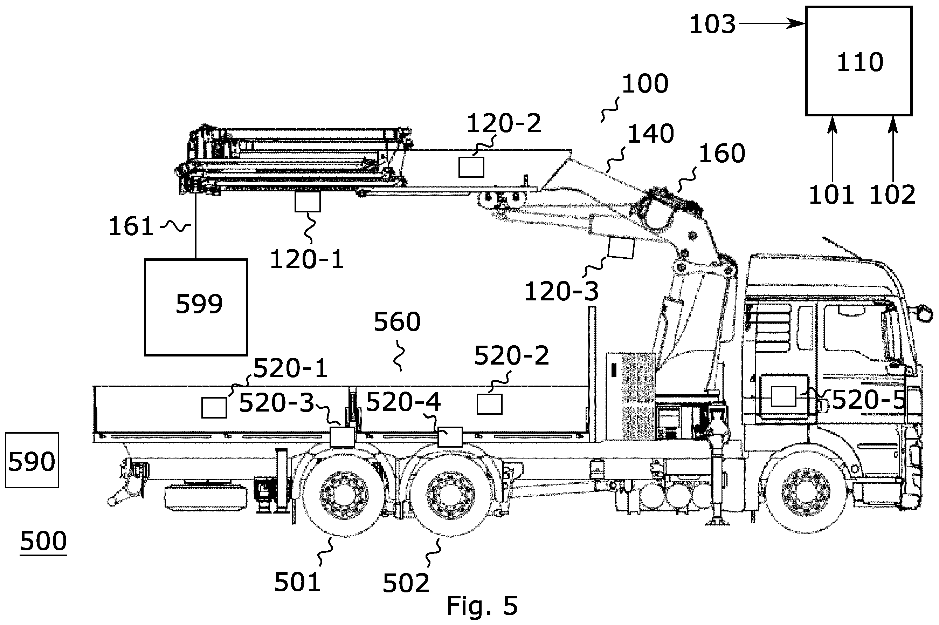

Further exemplary statuses that may be visualized according to the proposed technology will be described in the following with reference to **Fig. 5.** Fig. 5 illustrates a truck as an exemplary vehicle 500 holding the crane 100. In other words, the vehicle 500 has mounted thereon the crane 100.

In the example of Fig. 5, the crane 100 holds a load (cargo) 599. For example, the crane 100 may be used for loading the load 599 onto the vehicle 500 or for unloading the load 599 from the vehicle 500. The weight of the load 599 held by the crane 100 may be measured via one or more sensors mounted to the crane 100. Sensors and measurement techniques for measuring the weight of a load held by a crane (crane arm, boom) are generally known to a person skilled in the art. Hence, description of such sensors and measurement techniques will be omitted in the present disclosure. As a result of the measurement, the first sensor data 101 received by the visualization control circuitry 110 may indicate the weight of the load 599 held (lifted) by the crane 100. The visualization control circuitry 110 is configured to determine a load factor of the crane 100. The load factor of a crane is the ratio of the actual load being lifted (held) relative to the crane's rated or maximum load capacity. Accordingly, the visualization control circuitry 110 may be configured to determine the ratio of the weight of the load 599 held by the crane 100 indicated by the first sensor data 101 to the maximum weight to be held (lifted) by the crane 100 as the load factor of the crane 100. The load factor indicates how much of the crane's capacity is currently being utilized during a lifting operation (i.e., the utilization level of the crane 100). The load factor of the crane 100 is crucial for the operation of the crane for various reasons such as safety, equipment longevity, compliance or efficiency. Accordingly, the visualization control circuitry 110 is configured to control the light emission of at least one of the one or more lighting devices 120-1, ..., 120-6 to indicate the load factor of the crane 100. The lighting devices 120-4, 120-5 and 120-6 are omitted in Fig. 5 for reasons of simplicity.

For example, the visualization control circuitry 110 may select the lighting device 120-2 and control the light emission of the lighting device 120-2 to indicate the load factor of the crane 100. In other examples, the lighting device 120-1 may be selected instead of the lighting device 120-2.

The load factor of the crane 100 may be visualized in various ways. Two non-limiting examples will be given in the following.

For example, the visualization control circuitry 110 may control the at least one of the one or more lighting devices 120-1, ..., 120-6 (e.g., the lighting device 120-2) to emit light with a light color selected based on the load factor of the crane 100. For example, the visualization control circuitry 110 may control the lighting device 120-1 to emit green light for a load factor of less than 70 %, yellow light for a load factor between 70 % and 95 % and red light for a load factor of more than 95 %. The foregoing values are selected for illustrative purposes only - other values may be used instead. The lighting device 200 described above with reference to Fig. 2 may be used for the lighting device 120-2.

In other examples, the visualization control circuitry 110 may control, based on the load factor of the crane 100, a lighting device of the one or more lighting devices 120-1, ..., 120-6 (e.g., the lighting device 120-2) with a plurality of selectively activatable light emitters to activate a number of successive ones of the light emitters. The plurality of light emitters are arranged one after another. The number of activated light emitters depends on the load factor of the crane 100. For example, the ratio of activated light emitters to the total number of activatable light emitters may correspond to (be equal to) the load factor of the crane 100. One of the lighting devices 300 and 400 described above may, e.g., be used for the lighting device 120-2 and the visualization control circuitry 110 may control the lighting device 120-2 to activate a number of successive ones of the light emitters 310-1, ... 310-K or 410. The number of activated light emitters 310-1, ... 310-K or 410 depends on the load factor of the crane 100 - analogously to what is described above.

The load 599 is held by the crane 100 via a rope 161. The crane 100 comprises a rope winch 160 from which the rope 161 is unwound. The rope winch is mounted to the boom or crane arm 140. The operator of the crane 100 controls the length of the rope 161 unwound from the rope winch 160 (e.g., by means of the remote control 199, which is omitted in Fig. 5 for reasons of simplicity).

The length of the rope 161 unwound from the rope winch 160 may be measured via one or more sensors mounted to the crane 100. Sensors and measurement techniques for measuring the length of a rope unwound from a rope winch are generally known to a person skilled in the art. Hence, description of such sensors and measurement techniques will be omitted in the present disclosure. As a result of the measurement, the first sensor data 101 received by the visualization control circuitry 110 may indicate the length of the rope 161 unwound from the rope winch 160. The length of the rope 161 unwound from the rope winch 160 or a remaining length of the rope 161 not yet unwound from the rope winch 160 may be interesting parameters for the operator of the crane 100 when operating the crane. Accordingly, the visualization control circuitry 110 is configured to control the light emission of at least one of the one or more lighting devices 120-1, ..., 120-6 to indicate the length of the rope 161 unwound from the rope winch 161 or the remaining length of the rope 161 not yet unwound from the rope winch 160.

The visualization control circuitry 110 may be configured to determine the remaining length of the rope 161 not yet unwound from the rope winch 160 based on a difference between a maximum length of the rope 161 that can be unwound from the rope winch 160 and the (current) length of the rope 161 unwound from the rope winch 160 indicated by the first sensor data 101.

It is to be noted that the visualized length of the rope 161 unwound from the rope winch 160 may be the absolute length of the rope 161 unwound from the rope winch 160 as measured or be a relative length of the rope 161 unwound from the rope winch 160 with respect to (relative to) a reference (length). For example, when a certain length of the rope 161 is unwound from the rope winch 160, the operator may make a user input at the remote control 199 to set this length as a reference (user-defined zero length) for the length visualization. Accordingly, visualization control circuitry 110 may be configured to determine the relative length of the rope 161 unwound from the rope winch 160 based on a difference between the (current) length of the rope 161 unwound from the rope winch 160 indicated by the first sensor data 101 and the length set as reference by the operator. In other examples, the first sensor data 101 received by the visualization control circuitry 110 may indicate the relative length of the rope 161 unwound from the rope winch 160 with respect to the reference rather than the absolute length of the rope 161 unwound from the rope winch 160.

For example, the visualization control circuitry 110 may select the lighting device 120-1 and control the light emission of the lighting device 120-1 to indicate the length of the rope 161 unwound from the rope winch 161 or the remaining length of the rope 161 not yet unwound from the rope winch 160. In other examples, the lighting device 120-2 may be selected instead of the lighting device 120-1.

The length of the rope 161 unwound from the rope winch 160 or the remaining length of the rope 161 not yet unwound from the rope winch 160 may be visualized in various ways. Two non-limiting examples will be given in the following.

For example, the visualization control circuitry 110 may control the at least one of the one or more lighting devices 120-1, ..., 120-6 (e.g., the lighting device 120-1) to emit light with a light color selected based on the length of the rope 161 unwound from the rope winch 160 or the remaining length of the rope 161 not yet unwound from the rope winch 160. For example, the visualization control circuitry 110 may control the lighting device 120-1 to emit green light if the length of the rope 161 unwound from the rope winch 160 is less than 70 % of the maximum length of the rope 161 that can be unwound from the rope winch 160 (or the remaining length of the rope 161 not yet unwound from the rope winch 160 is more than 30 % of the maximum length), yellow light if the length of the rope 161 unwound from the rope winch 160 is between 70 % and 95 % of the maximum length (or the remaining length of the rope 161 not yet unwound from the rope winch 160 is between 5 % and 30 % of the maximum length) and red light if the length of the rope 161 unwound from the rope winch 160 is more than 95 % of the maximum length (or the remaining length of the rope 161 not yet unwound from the rope winch 160 is less than 5 % of the maximum length). The foregoing values are selected for illustrative purposes only - other values may be used instead. The lighting device 200 described above with reference to Fig. 2 may be used for the lighting device 120-1.

In other examples, the visualization control circuitry 110 may control, based on the length of the rope 161 unwound from the rope winch 160 or the remaining length of the rope 161 not yet unwound from the rope winch 160, a lighting device of the one or more lighting devices 120-1, ..., 120-6 (e.g., the lighting device 120-1) with a plurality of selectively activatable light emitters to activate a number of successive ones of the light emitters. The plurality of light emitters are arranged one after another. The number of activated light emitters depends on the length of the rope 161 unwound from the rope winch 160 or the remaining length of the rope 161 not yet unwound from the rope winch 160. For example, the ratio of activated light emitters to the total number of activatable light emitters may correspond to (be equal to) the ratio of the length of the rope 161 unwound from the rope winch 160 to the maximum length of the rope 161 that can be unwound from the rope winch 160. In other examples, the ratio of activated light emitters to the total number of activatable light emitters may correspond to (be equal to) the ratio of the remaining length of the rope 161 not yet unwound from the rope winch 160 to the maximum length of the rope 161 that can be unwound from the rope winch 160. One of the lighting devices 300 and 400 described above may, e.g., be used for the lighting device 120-1 and the visualization control circuitry 110 may control the lighting device 120-2 to activate a number of successive ones of the light emitters 310-1, ... 310-K or 410. The number of activated light emitters 310-1, ... 310-K or 410 depends on the length of the rope 161 unwound from the rope winch 160 or the remaining length of the rope 161 not yet unwound from the rope winch 160 - analogously to what is described above.

As indicated above, the present technology may further be used to visualize statuses of devices and systems external to the crane 100. For example, the second sensor data 102 may indicate a remaining amount of fuel or electrical energy of the vehicle 500. The remaining amount of fuel or electrical energy of the vehicle 500 is an interesting information for the operator of the crane 100 as the crane 100 may draw the energy required for its operation from the vehicle 500. In other words, the vehicle 500 may supply the crane 100 with the required energy for operation. Accordingly, the remaining amount of fuel or electrical energy of the vehicle 500 determines the amount of energy remaining for the further operation of the crane. In other examples, a power supply 590 external to the crane 100 and the vehicle 500 may provide the crane 100 with the required energy for operation. For example, the power supply 590 may be locally provided on a construction site to supply the crane 100 with electrical energy rather than using electrical energy of the vehicle 500. The power supply 590 may be reversibly coupled with one of the crane 100 and the vehicle 500 for supplying the crane 100 with electrical energy. Accordingly, the visualization control circuitry 110 may be configured to receive third sensor data 103 (e.g., from the power supply 590) indicating (being encoded with information about) a remaining amount of electrical energy of the power supply 590.

Accordingly, the visualization control circuitry 110 is configured to control the light emission of at least one of the one or more lighting devices 120-1, ..., 120-6 to indicate the remaining amount of fuel or electrical energy of the vehicle 500 or the remaining amount of electrical energy of the power supply 590. For example, the visualization control circuitry 110 may select the lighting device 120-2 and control the light emission of the lighting device 120-2 to indicate the remaining amount of fuel or electrical energy of the vehicle 500 or the remaining amount of electrical energy of the power supply 590. In other examples, the lighting device 120-1 may be selected instead of the lighting device 120-2.

The remaining amount of fuel or electrical energy of the vehicle 500 or the remaining amount of electrical energy of the power supply 590 may be visualized in various ways. Two non-limiting examples will be given in the following.

For example, the visualization control circuitry 110 may control the at least one of the one or more lighting devices 120-1, ..., 120-6 (e.g., the lighting device 120-2) to emit light with a light color selected based on the remaining amount of fuel or electrical energy of the vehicle 500 or the remaining amount of electrical energy of the power supply 590. For example, the visualization control circuitry 110 may control the lighting device 120-2 to emit green light if the remaining amount of fuel or electrical energy of the vehicle 500 or the remaining amount of electrical energy of the power supply 590 is more than 30 % of the maximum amount of fuel or electrical energy of the vehicle 500 or the maximum amount of electrical energy of the power supply 590, yellow light if the remaining amount of fuel or electrical energy of the vehicle 500 or the remaining amount of electrical energy of the power supply 590 is between 5 % and 25 % of the maximum amount of fuel or electrical energy of the vehicle 500 or the maximum amount of electrical energy of the power supply 590 and red light if the remaining amount of fuel or electrical energy of the vehicle 500 or the remaining amount of electrical energy of the power supply 590 is less than 5 % of the maximum amount of fuel or electrical energy of the vehicle 500 or the maximum amount of electrical energy of the power supply 590. The foregoing values are selected for illustrative purposes only - other values may be used instead. The lighting device 200 described above with reference to Fig. 2 may be used for the lighting device 120-1.

In other examples, the visualization control circuitry 110 may control, based on the remaining amount of fuel or electrical energy of the vehicle 500 or the remaining amount of electrical energy of the power supply 590, a lighting device of the one or more lighting devices 120-1, ..., 120-6 (e.g., the lighting device 120-2) with a plurality of selectively activatable light emitters to activate a number of successive ones of the light emitters. The plurality of light emitters are arranged one after another. The number of activated light emitters depends on the remaining amount of fuel or electrical energy of the vehicle 500 or the remaining amount of electrical energy of the power supply 590. For example, the ratio of activated light emitters to the total number of activatable light emitters may correspond to (be equal to) the ratio of the remaining amount of fuel or electrical energy of the vehicle 500 or the remaining amount of electrical energy of the power supply 590 to the maximum amount of fuel or electrical energy of the vehicle 500 or the maximum amount of electrical energy of the power supply 590. One of the lighting devices 300 and 400 described above may, e.g., be used for the lighting device 120-2 and the visualization control circuitry 110 may control the lighting device 120-2 to activate a number of successive ones of the light emitters 310-1, ... 310-K or 410. The number of activated light emitters 310-1, ... 310-K or 410 depends on the remaining amount of fuel or electrical energy of the vehicle 500 or the remaining amount of electrical energy of the power supply 590 - analogously to what is described above.

In other examples, the information about the remaining amount of fuel or electrical energy of the vehicle 500 or the remaining amount of electrical energy of the power supply 590 as indicated by the second sensor data 102 and the third sensor data 103 may be further processed before visualization. For example, the visualization control circuitry 110 may be configured to determine the extent to which the crane 100 can still be operated based on the remaining amount of fuel or electrical energy of the vehicle 500 or the remaining amount of electrical energy of the power supply 590. The extent to which the crane 100 can still be operated refers to the range or degree of functionality and usability that the crane 100 possesses given the remaining amount of fuel or electrical energy of the vehicle 500 or the remaining amount of electrical energy of the power supply 590. For example, the extent to which the crane 100 may still be operated may be expressed in remaining working hours of the crane 100 given the remaining amount of fuel or electrical energy of the vehicle 500 or the remaining amount of electrical energy of the power supply 590. Similarly, the extent to which the crane 100 may still be operated may be expressed in a remaining load that the crane 100 may still lift given the remaining amount of fuel or electrical energy of the vehicle 500 or the remaining amount of electrical energy of the power supply 590. In still other examples, the extent to which the crane 100 may still be operated may be expressed in a remaining distance that the boom or crane arm 140 can still travel (be moved).

Accordingly, the visualization control circuitry 110 may be configured to control the light emission of at least one of the one or more lighting devices 120-1, ..., 120-6 to indicate the extent to which the crane 100 can still be operated. For example, the visualization control circuitry 110 may select the lighting device 120-2 and control the light emission of the lighting device 120-2 to indicate the extent to which the crane 100 can still be operated. In other examples, the lighting device 120-1 may be selected instead of the lighting device 120-2.

The extent to which the crane 100 can still be operated may be visualized in various ways. Two non-limiting examples will be given in the following.

For example, the visualization control circuitry 110 may control the at least one of the one or more lighting devices 120-1, ..., 120-6 (e.g., the lighting device 120-2) to emit light with a light color selected based on the extent to which the crane 100 can still be operated. For example, the visualization control circuitry 110 may control the lighting device 120-2 to emit green light if the extent to which the crane 100 can still be operated is more than 30 % of a predetermined (reference) extent, yellow light if the extent to which the crane 100 can still be operated is between 5 % and 25 % of the predetermined extent and red light if the extent to which the crane 100 can still be operated is less than 5 % of the predetermined extent. The foregoing values are selected for illustrative purposes only - other values may be used instead. The lighting device 200 described above with reference to Fig. 2 may be used for the lighting device 120-2.

In other examples, the visualization control circuitry 110 may control, based on the extent to which the crane 100 can still be operated, a lighting device of the one or more lighting devices 120-1, ..., 120-6 (e.g., the lighting device 120-2) with a plurality of selectively activatable light emitters to activate a number of successive ones of the light emitters. The plurality of light emitters are arranged one after another. The number of activated light emitters depends on the extent to which the crane 100 can still be operated. For example, the ratio of activated light emitters to the total number of activatable light emitters may correspond to (be equal to) the ratio of the extent to which the crane 100 can still be operated to the predetermined extent. One of the lighting devices 300 and 400 described above may, e.g., be used for the lighting device 120-2 and the visualization control circuitry 110 may control the lighting device 120-2 to activate a number of successive ones of the light emitters 310-1, ... 310-K or 410. The number of activated light emitters 310-1, ... 310-K or 410 depends on the extent to which the crane 100 can still be operated - analogously to what is described above.

In the foregoing examples, various statuses of the crane 100 and the vehicle 500 are visualized by lighting devices mounted to the outside of the crane 100. However, the present technology is not limited thereto. In some examples, the vehicle 500 may optionally comprise one or more further lighting devices 520-1, ..., 520-5 for visualizing a status of at least one of the crane 100 and the vehicle 500. The one or more further lighting devices 520-1, ..., 520-5 are mounted on the outside of the vehicle 500 such that the lighting devices 520-1, ..., 520-5 are visible for the operator of the crane 100 while the operator is present in the environment of the crane 100 (vehicle 500). In the example of Fig. 5, the vehicle 500 comprises five further lighting devices. However, the present disclosure is not limited thereto. In general, the vehicle 500 may comprise any number S ≥ 1 of further lighting devices. The further lighting devices may be mounted to any element (part) of the vehicle 500. In particular, different further lighting devices may be mounted to different elements of the vehicle 500 as illustrated in Fig. 5. The further lighting devices 520-1, ..., 520-5 may be identical to or different from each other (e.g., in terms of form, size, lighting technology, characteristics of the emitted or emittable light). The visualization control circuitry 110 is coupled (e.g., wirelessly or wired) to the further lighting devices 520-1, ..., 520-5 for controlling light emission by the further lighting devices 520-1, ..., 520-5.

Analogously to the above described control of the light emission by the one or more lighting devices 120-1, ..., 120-6, the visualization control circuitry 110 is further configured to control the light emission by the one or more further lighting devices 520-1, ..., 520-5 based on the at least one of the first sensor data 101 and the second sensor data 102. In other words, the visualization control circuitry 110 is configured to process the first sensor data 101 and/or the second sensor data 102 to control the light emission by the one or more further lighting devices 520-1, ..., 520-5 for visualizing the status of at least one of the crane 100 and the vehicle 500.

Further visualizing the status of the crane 100 and/or the vehicle 500 by means of the lighting devices 520-1, ..., 520-5 may be convenient for the operator as the operator is not required to divert his/her attention between the crane 100 / the vehicle 500 and a separate device for status indication such as the remote control 199 for operating the crane 100.

For example, if the second sensor data 102 is received by the visualization control circuitry 110, the visualization control circuitry 110 may be configured to determine a status of a component of the vehicle 500 based on the second sensor data 102. The component of the vehicle 500 may, in general, be any element or substructure of the vehicle 500. The status of the vehicle 500's component refers to the (current) condition or operational state of the vehicle 500's component. For example, if the second sensor data 102 indicate the remaining amount of fuel or electrical energy of the vehicle 500, the status of the vehicle 500's component may be the fuel level or the level of available electrical energy of the vehicle 500. The foregoing example for the status of a component of the vehicle 500 is selected for illustrative purposes only. The present disclosure is not limited thereto.

The visualization control circuitry 110 may further be configured to select at least one of the one or more further lighting devices 520-1, ..., 520-5 for visualizing the status of the vehicle 500's component. In particular, the selected at least one of the one or more further lighting devices 520-1, ..., 520-5 may be mounted to or in close proximity of the component whose status it visualizes.

The visualization control circuitry 110 may further be configured to control the light emission of at least one of the one or more selected further lighting devices 520-1, ..., 520-5 to indicate the status of the vehicle 500's component. For example, for indicating the remaining amount of fuel or electrical energy of the vehicle 500, the visualization control circuitry 110 may control the lighting device 520-5 to emit light of predefined light colors or light patterns depending on the remaining amount of fuel or electrical energy of the vehicle 500 (e.g., green light and/or a first blinking frequency for a fuel level or level of available electrical energy of less more than 30 %, yellow light and/or a second blinking frequency for a fuel level or level of available electrical energy between 10 % and 30 % and red light and/or a third blinking frequency for a fuel level or level of available electrical energy of less than 10 %). The foregoing example for visualization of a status of the vehicle 500's component is selected for illustrative purposes only. The present disclosure is not limited thereto.

Similarly, if the first sensor data 101 is received by the visualization control circuitry 110, the visualization control circuitry 110 may be configured to determine a status of a component of the crane 100 based on the first sensor data 101 and visualize the status of the crane 100's component by corresponding control of the further lighting devices 520-1, ..., 520-5. Furthermore, analogously to what is described above for the processing of the third sensor data 103, the visualization control circuitry 110 may be configured to determine a status of a device external to the crane 100 and the vehicle 500 based on the third sensor data 103 and visualize the status of the external device by corresponding control of the further lighting devices 520-1, ..., 520-5.

As mentioned above, various statuses of the crane 100 and/or the vehicle 500 may be visualized by means of the further lighting devices 520-1, ..., 520-5. In the following, the visualization of exemplary statuses will be described in greater detail.

One interesting parameter of the vehicle 500 for the operator is the respective axle load of the various axles of the vehicle 500. The axle load is the total weight bearing on the roadway for all wheels connected to a given axle. Knowing the respective axle load may be of interest for the operator of the crane 100 to, e.g., ensure that legal limits (regulations) are not exceeded by the loaded vehicle 500.

The axle load of a vehicle axle may be measured via one or more sensors mounted to the vehicle 500 (in particular to the respective axle and/or the vehicle chassis holding the respective axle). Sensors and measurement techniques for measuring the axle load of an axle are generally known to a person skilled in the art. Hence, description of such sensors and measurement techniques will be omitted in the present disclosure. As a result of the measurement, the second sensor data 102 received by the visualization control circuitry 110 may indicate a respective axle load of one or more axles of the vehicle 500. For example, the second sensor data 102 may indicate the axle loads for the two axles to which the tires 501 and 502 are connected (mounted). Accordingly, the visualization control circuitry 110 is configured to control the light emission of at least one of the one or more further lighting devices 520-1, ..., 520-5 to indicate the respective axle load of the one or more axles of the vehicle 500.

For example, the visualization control circuitry 110 may select the lighting device 520-3 and control the light emission of the lighting device 520-3 to indicate the axle load of the axle to which the tire 501 is connected. The lighting device 520-3 visualizes the status of the axle and is mounted to the vehicle in proximity to the axle. Similarly, the visualization control circuitry 110 may select the lighting device 520-4 and control the light emission of the lighting device 520-4 to indicate the axle load of the other axle to which the tire 502 is connected. The lighting device 520-4 visualizes the status of the other axle and is mounted to the vehicle in proximity to the other axle. Accordingly, the operator of the crane 100 may intuitively associate the status visualized by the respective one of the lighting devices 520-3 and 520-4 to the respective axle.

The respective axle load of one or more axles of the vehicle 500 may be visualized in various ways. Two non-limiting examples will be given in the following.

For example, the visualization control circuitry 110 may control the at least one of the one or more further lighting devices 520-1, ..., 520-5 for the respective axle (e.g., the lighting device 520-3 and/or the lighting device 520-4) to emit light with a light color selected based on the respective axle load. For example, the visualization control circuitry 110 may control the lighting device 520-3 to emit green light if the axle load of the axle to which the tire 501 is connected is less than 70 % of a maximum axle load, yellow light if the axle load of the axle to which the tire 501 is connected is between 70 % and 95 % of the axle load and red light if the axle load of the axle to which the tire 501 is connected is more than 95 % of the maximum axle load. The visualization control circuitry 110 may control the lighting device 520-4 analogously for visualizing the axle load of the other axle to which the tire 502 is connected. The foregoing values are selected for illustrative purposes only - other values may be used instead. The lighting device 200 described above with reference to Fig. 2 may be used for the lighting devices 520-3 and 520-4.

In other examples, the visualization control circuitry 110 may control, based on the respective axle load, a lighting device of the one or more further lighting devices 520-1, ..., 520-5 for the respective axle (e.g., the lighting device 520-3 and/or the lighting device 520-4) with a plurality of selectively activatable light emitters to activate a number of successive ones of the light emitters. The plurality of light emitters are arranged one after another. The number of activated light emitters depends on the respective axle load. For example, the ratio of activated light emitters to the total number of activatable light emitters may correspond to (be equal to) the ratio of the respective axle load for the axle to the maximum axle load. One of the lighting device 300 and 400 described above may, e.g., be used for the lighting device 520-3 and the visualization control circuitry 110 may control the lighting device 520-3 to activate a number of successive ones of the light emitters 310-1, ... 310-K or 410. The number of activated light emitters 310-1, ... 310-K or 410 depends on the axle load of the axle to which the tire 501 is connected - analogously to what is described above. Similarly, one of the lighting device 300 and 400 described above may, e.g., be used for the lighting device 520-3 and the visualization control circuitry 110 may control the lighting device 520-4 to activate a number of successive ones of the light emitters 310-1, ... 310-K or 410, wherein the number of activated light emitters 310-1, ... 310-K or 410 depends on the axle load of the axle to which the tire 502 is connected.

In some examples, status visualization may further be used for facilitating the loading of the vehicle 500. For example, the first sensor data 101 may indicate the weight of the load 599 held by the crane 100 and the second sensor data may indicate the respective axle load of the multiple axles of the vehicle 500. Accordingly, the visualization control circuitry 110 may be configured to determine a target unloading position for the load 599 on a load space 560 of the vehicle 500. The load space 560 is the designated area of the vehicle 500 within the vehicle 500 where loads (cargo, goods) can be loaded and transported. The target unloading position is the designated spot or area within the load space 560 where the load 590 is intended to be unloaded. The visualization control circuitry 110 may determine the target unloading position for the load 599 on the load space 560 in various ways, under various conditions and taking into various types of information. For example, the visualization control circuitry 110 may determine the target unloading position for the load 599 such that the respective axle load of the multiple axles of the vehicle 500 does not exceed regulatory limits or limits set by the manufacturer or operator of the vehicle 500. Alternatively or additionally, the visualization control circuitry 110 may determine the target unloading position for the load 599 such that the total load (i.e., the load 599 and, if applicable, further pieces of load) is evenly distributed within the load space 560. Further alternatively or additionally, the visualization control circuitry 110 may determine the target unloading position for the load 599 taking into account the positions and/or dimensions and/or weights of other pieces of load already present in the load space 560 or pieces of load still to be unloaded in the load space 560. The visualization control circuitry 110 may, e.g., receive further sensor data of one or more sensors mounted to the vehicle 500 which indicate (are encoded with information about) the positions and/or dimensions and/or weights of other pieces of load already present in the load space 560.

The visualization control circuitry 110 may accordingly be configured to control the light emission of at least part of the one or more further lighting devices 520-1, ..., 520-5 to indicate the target unloading position. In particular, for indicating the target unloading position, the visualization control circuitry 110 may be configured to control one of the one or more further lighting devices 520-1, ..., 520-5 closest to the target unloading position to emit light of a predefined light color. The predefined light color may be any color (e.g., green). In the example of Fig. 5, the visualization control circuitry 110 selects one of the lighting devices 520-1 and 520-2 and controls the light emission of the selected one of the devices 520-1 and 520-2 to indicate the target unloading position. For example, if the target unloading position is in the front part of the load space 560, the visualization control circuitry 110 selects the lighting device 520-2 and controls the light emission of the device 520-2 to indicate the target unloading position. Similarly, if the target unloading position is in the back part of the load space 560, the visualization control circuitry 110 selects the lighting device 520-1 and controls the light emission of the device 520-1 to indicate the target unloading position. The visualization control circuitry 110 may, e.g., control the selected one of the lighting devices 520-1 and 520-2 to emit green light to indicate the target unloading position. However, it is to be noted that other light colors may be used instead of green light.

Optionally, the visualization control circuitry 110 may be configured to control light emission by one or more of the one or more further lighting devices 520-1, ..., 520-5 to indicate that the load is not to be unloaded within one or more parts of the load space 560. For example, if the target unloading position is in the front part of the load space 560, the visualization control circuitry 110 selects the lighting device 520-1 and controls the light emission of the device 520-1 to indicate that the load is not to be unloaded in the back part of the load space 560. Similarly, if the target unloading position is in the back part of the load space 560, the visualization control circuitry 110 selects the lighting device 520-2 and controls the light emission of the device 520-2 to indicate that the load is not to be unloaded in the back part of the load space 560. The visualization control circuitry 110 may, e.g., control the selected one of the lighting devices 520-1 and 520-2 to emit red light to indicate the load is not to be unloaded in the respective part of the load space 560. However, it is to be noted that other light colors may be used instead of red light.

It is to be noted that the present disclosure is not limited to loader cranes exhibiting the same structure and functionality as the loader crane 100 described above. In other examples, loader cranes with different structure and/or functionality may be used instead. For example, a loader crane with an additional fly jib may be used. Similarly, the boom or crane arm may be equipped with tools other than the rope 161 and the rope winch 160 for holding and lifting a load. For example, a grapple, a crane fork, a clamshell bucket or a multi-shell grab may be mounted to the boom or crane arm instead.

In the above examples, the proposed technology for status visualization is described with reference to knuckle boom cranes (loader cranes). However, it is to be noted that the present disclosure is not limited thereto. The proposed technology for status visualization may, in general, be used for any type of crane. For example, the proposed technology for status visualization may be used for a tower crane, a mobile crane, an overhead crane, a telescopic crane, a crawler crane, a floating crane, a gantry crane or a jib crane. Accordingly, the examples of the present disclosure further relate to the aforementioned types of cranes using the proposed technology for status visualization.

Similarly, it is referred to a truck as an exemplary vehicle for holding the loader crane in the above examples. However, the present disclosure is not limited to this specific type of vehicle. In general, a vehicle holding a crane according to the proposed technology may be any type of land vehicle. In particular, the vehicle may be wheeled, tracked or railed to apply steering and drive forces against the ground. The present disclosure is not limited to land vehicles. In other examples, a vehicle holding a crane (having mounted thereon a crane) according to the proposed technology may be a watercraft such as a ship, a boat or a barge.

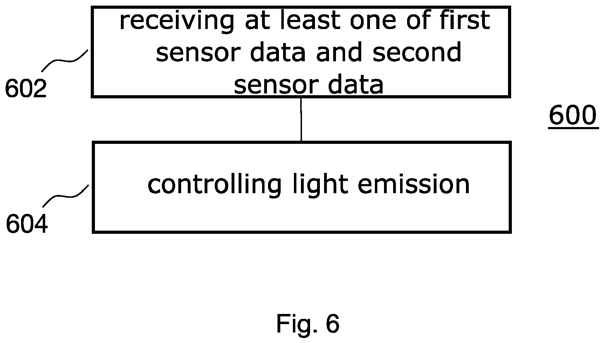

For further highlighting the status visualization described above, Fig. 6 illustrates a flowchart of a method for a crane for controlling status visualization. The method 600 comprises receiving 602 at least one of first sensor data of one or more sensors mounted to the crane and second sensor data of one or more sensors of a vehicle holding the crane. One or more lighting devices for visualizing a status of at least one of the crane and the vehicle are mounted to the crane. The method 600 further comprises controlling 604 light emission by the one or more lighting devices based on the at least one of the first sensor data and the second sensor data.

Analogously to what is described above, the method 600 allows to visualize the status of the crane and/or the vehicle holding the crane via the one or more lighting devices mounted to the crane such that an operator of the crane is not necessitated to shift focus away from the crane. This may allow increased safety of the crane operation as the operator may continuously observe the crane. Furthermore, operation convenience may be increased as the operator is not required to divert his/her attention between the crane and a separate device for status indication (such as a radio remote control).

More details and aspects of the method 600 are explained in connection with the proposed technique or one or more examples described above (e.g., Fig. 1 to Fig. 5). The method 600 may comprise one or more additional optional features corresponding to one or more aspects of the proposed technique or one or more examples described above.

The examples described herein may be summarized as follows:
An example (e.g., example 1) relates to a crane comprising one or more lighting devices for visualizing a status of at least one of the crane and a vehicle holding the crane, wherein the one or more lighting devices are mounted to the crane, and visualization control circuitry configured to receive at least one of first sensor data of one or more sensors mounted to the crane and second sensor data of one or more sensors of the vehicle, and control light emission by the one or more lighting devices based on the at least one of the first sensor data and the second sensor data.

Another example (e.g., example 2) relates to a previous example (e.g., example 1) or to any other example, further comprising that the visualization control circuitry is configured to receive the first sensor data, determine a status of a component of the crane based on the first sensor data, select at least one of the one or more lighting devices for visualizing the status of the component, and control the light emission of at least one of the one or more selected lighting devices to indicate the status of the component.

Another example (e.g., example 3) relates to a previous example (e.g., example 2) or to any other example, further comprising that the at least one of the one or more lighting devices is mounted to or in close proximity of the component whose status it visualizes.

Another example (e.g., example 4) relates to a previous example (e.g., one of the examples 1 to 3) or to any other example, further comprising that the visualization control circuitry is configured to receive the first sensor data, wherein the first sensor data indicate an extension of an extendable crane arm of the crane, and wherein the visualization control circuitry is further configured to control the light emission of at least one of the one or more lighting devices to indicate the extension of the crane arm or a remaining extension of the crane arm.

Another example (e.g., example 5) relates to a previous example (e.g., example 4) or to any other example, further comprising that for indicating the extension of the crane arm or the remaining extension of the crane arm, the visualization control circuitry is further configured to control the at least one of the one or more lighting devices to emit light with a light color selected based on the one of the extension of the crane arm and the remaining extension of the crane arm, or control, based on the one of the extension of the crane arm and the remaining extension of the crane arm, a lighting device of the one or more lighting devices with a plurality of selectively activatable light emitters to activate a number of successive ones of the light emitters, wherein the plurality of light emitters are arranged one after another, and wherein the number of activated light emitters depends on the one of the extension of the crane arm and the remaining extension of the crane arm.

Another example (e.g., example 6) relates to a previous example (e.g., one of the examples 1 to 5) or to any other example, further comprising that the crane comprises a hydraulic cylinder configured to move a crane arm of the crane or a segment of the crane arm, wherein the visualization control circuitry is configured to receive the first sensor data, wherein the first sensor data indicate a pressure at the hydraulic cylinder, and wherein the visualization control circuitry is further configured to control the light emission of at least one of the one or more lighting devices to indicate the pressure at the hydraulic cylinder.

Another example (e.g., example 7) relates to a previous example (e.g., example 6) or to any other example, further comprising that for indicating the pressure at the hydraulic cylinder, the visualization control circuitry is further configured to control the at least one of the one or more lighting devices to emit light with a light color selected based on the pressure at the hydraulic cylinder, or control, based on the pressure at the hydraulic cylinder, a lighting device of the one or more lighting devices with a plurality of selectively activatable light emitters to activate a number of successive ones of the light emitters, wherein the plurality of light emitters are arranged one after another, and wherein the number of activated light emitters depends on the pressure at the hydraulic cylinder.

Another example (e.g., example 8) relates to a previous example (e.g., one of the examples 1 to 7) or to any other example, further comprising that the crane comprises a support leg for selectively supporting the crane against ground, wherein the support leg comprises a hydraulic support cylinder, wherein the visualization control circuitry is configured to receive the first sensor data, wherein the first sensor data indicate a pressure at the hydraulic support cylinder, and wherein the visualization control circuitry is further configured to control the light emission of at least one of the one or more lighting devices to indicate the pressure at the hydraulic support cylinder.

Another example (e.g., example 9) relates to a previous example (e.g., example 8) or to any other example, further comprising that for indicating the pressure at the hydraulic support cylinder, the visualization control circuitry is further configured to control the at least one of the one or more lighting devices to emit light with a light color selected based on the pressure at the hydraulic support cylinder, or control, based on the pressure at the hydraulic support cylinder, a lighting device of the one or more lighting devices with a plurality of selectively activatable light emitters to activate a number of successive ones of the light emitters, wherein the plurality of light emitters are arranged one after another, and wherein the number of activated light emitters depends on the pressure at the hydraulic support cylinder.

Another example (e.g., example 10) relates to a previous example (e.g., example 9) or to any other example, further comprising that the visualization control circuitry is further configured to receive reference data indicating a reference point for the pressure at the hydraulic support cylinder, and control, based on the reference data, the lighting device to activate one of a plurality of selectively activatable further light emitters, the plurality of further light emitters being arranged in parallel to the plurality of light emitters, wherein the position of the activated further light emitter along the extension of the plurality of further light emitters corresponds to the reference point for the pressure at the hydraulic support cylinder.

Another example (e.g., example 11) relates to a previous example (e.g., one of the examples 1 to 10) or to any other example, further comprising that the visualization control circuitry is configured to receive the first sensor data, wherein the first sensor data indicate a weight of a load held by the crane, and wherein the visualization control circuitry is further configured to determine a load factor of the crane, and control the light emission of at least one of the one or more lighting devices to indicate the load factor of the crane.

Another example (e.g., example 12) relates to a previous example (e.g., example 11) or to any other example, further comprising that for indicating the load factor of the crane, the visualization control circuitry is further configured to control the at least one of the one or more lighting devices to emit light with a light color selected based on the load factor of the crane, or control, based on the load factor of the crane, a lighting device of the one or more lighting devices with a plurality of selectively activatable light emitters to activate a number of successive ones of the light emitters, wherein the plurality of light emitters are arranged one after another, and wherein the number of activated light emitters depends on the load factor of the crane.

Another example (e.g., example 13) relates to a previous example (e.g., one of the examples 1 to 12) or to any other example, further comprising that the crane comprises a rope winch, wherein the visualization control circuitry is configured to receive the first sensor data, wherein the first sensor data indicate a length of the rope unwound from the rope winch, and wherein the visualization control circuitry is further configured to control the light emission of at least one of the one or more lighting devices to indicate the length of the rope unwound from the rope winch or a remaining length of the rope not yet unwound from the rope winch.

Another example (e.g., example 14) relates to a previous example (e.g., example 13) or to any other example, further comprising that for indicating the length of the rope unwound from the rope winch or the remaining length of the rope not yet unwound from the rope winch, the visualization control circuitry is further configured to control the at least one of the one or more lighting devices to emit light with a light color selected based on the one of the length of the rope unwound from the rope winch and the remaining length of the rope not yet unwound from the rope winch, or control, based on the one of the length of the rope unwound from the rope winch and the remaining length of the rope not yet unwound from the rope winch, a lighting device of the one or more lighting devices with a plurality of selectively activatable light emitters to activate a number of successive ones of the light emitters, wherein the plurality of light emitters are arranged one after another, and wherein the number of activated light emitters depends on the one of the length of the rope unwound from the rope winch and the remaining length of the rope not yet unwound from the rope winch.

Another example (e.g., example 15) relates to a previous example (e.g., one of the examples 1 to 14) or to any other example, further comprising that the visualization control circuitry is configured to receive the second sensor data or third sensor data, wherein the second sensor data indicate a remaining amount of fuel or electrical energy of the vehicle, wherein the third sensor data indicate a remaining amount of electrical energy of a power supply external to the crane, and wherein the visualization control circuitry is further configured to control the light emission of at least one of the one or more lighting devices to indicate the remaining amount of fuel or electrical energy of the vehicle or the remaining amount of electrical energy of the power supply.

Another example (e.g., example 16) relates to a previous example (e.g., example 15) or to any other example, further comprising that for indicating the remaining amount of fuel or electrical energy of the vehicle or the remaining amount of electrical energy of the power supply, the visualization control circuitry is further configured to control the at least one of the one or more lighting devices to emit light with a light color selected based on the one of the remaining amount of fuel, the electrical energy of the vehicle and the remaining amount of electrical energy of the power supply, or control, based on the one of the remaining amount of fuel, the electrical energy of the vehicle and the remaining amount of electrical energy of the power supply, a lighting device of the one or more lighting devices with a plurality of selectively activatable light emitters to activate a number of successive ones of the light emitters, wherein the plurality of light emitters are arranged one after another, and wherein the number of activated light emitters depends on the one of the remaining amount of fuel, the electrical energy of the vehicle and the remaining amount of electrical energy of the power supply.

Another example (e.g., example 17) relates to a previous example (e.g., one of the examples 1 to 16) or to any other example, further comprising that the visualization control circuitry is configured to receive the second sensor data or third sensor data, wherein the second sensor data indicate a remaining amount of fuel or electrical energy of the vehicle, wherein the third sensor data indicate a remaining amount of electrical energy of a power supply external to the crane, and wherein the visualization control circuitry is further configured to determine the extent to which the crane can still be operated based on the remaining amount of fuel or electrical energy of the vehicle or the remaining amount of electrical energy of the power supply, and control the light emission of at least one of the one or more lighting devices to indicate the extent to which the crane can still be operated.

Another example (e.g., example 18) relates to a previous example (e.g., example 17) or to any other example, further comprising that for indicating the extent to which the crane can still be operated, the visualization control circuitry is further configured to control the at least one of the one or more lighting devices to emit light with a light color selected based on the extent to which the crane can still be operated, or control, based on the extent to which the crane can still be operated, a lighting device of the one or more lighting devices with a plurality of selectively activatable light emitters to activate a number of successive ones of the light emitters, wherein the plurality of light emitters are arranged one after another, and wherein the number of activated light emitters depends on the extent to which the crane can still be operated

Another example (e.g., example 19) relates to a previous example (e.g., one of the examples 1 to 18) or to any other example, further comprising that at least one of the first sensor data and the second sensor data indicates presence of an object in a predetermined region of the crane's environment, and wherein the visualization control circuitry is further configured to control the light emission of at least one of the one or more lighting devices to indicate the presence of the object in the predetermined region of the crane's environment.

Another example (e.g., example 20) relates to a previous example (e.g., example 19) or to any other example, further comprising that for indicating the presence of the object in the predetermined region of the crane's environment, the visualization control circuitry is further configured to control the at least one of the one or more lighting devices to emit light of a predefined light color.

Another example (e.g., example 21) relates to a previous example (e.g., one of the examples 1 to 20) or to any other example, further comprising that the visualization control circuitry is further configured to receive operation status data indicating execution of an autonomous or automatic function by the crane, and control, based on the operation status data, the light emission of at least one of the one or more lighting devices to indicate the execution of the autonomous or automatic function by the crane.

Another example (e.g., example 22) relates to a previous example (e.g., example 21) or to any other example, further comprising that for indicating the execution of the autonomous or automatic function by the crane, the visualization control circuitry is further configured to control the at least one of the one or more lighting devices to emit light of a predefined light color.

Another example (e.g., example 23) relates to a previous example (e.g., one of the examples 1 to 22) or to any other example, further comprising interface circuitry configured to transmit visualization status data indicating at least one of a status of the light emission by the one or more lighting devices and a variation thereof to a remote control of the crane.

Another example (e.g., example 24) relates to a previous example (e.g., one of the examples 1 to 23) or to any other example, further comprising that the crane is a loader crane.

An example (e.g., example 25) relates to a vehicle having mounted thereon a crane according to a previous example (e.g., one of the examples 1 to 24) or to any other example.

Another example (e.g., example 26) relates to a previous example (e.g., example 25) or to any other example, further comprising one or more further lighting devices for visualizing a status of at least one of the crane and the vehicle, wherein the one or more further lighting devices are mounted on the outside of the vehicle, wherein the visualization control circuitry is further configured to control light emission by the one or more further lighting devices based on the at least one of the first sensor data and the second sensor data.

Another example (e.g., example 27) relates to a previous example (e.g., example 26) or to any other example, further comprising that the visualization control circuitry is configured to receive the second sensor data, determine a status of a component of the vehicle based on the second sensor data, select at least one of the one or more further lighting devices for visualizing the status of the component of the vehicle, and control the light emission of at least one of the one or more further lighting devices to indicate the status of the component of the vehicle.

Another example (e.g., example 28) relates to a previous example (e.g., example 27) or to any other example, further comprising that the at least one of the one or more further lighting devices is mounted to or in close proximity of the component of the vehicle whose status it visualizes.

Another example (e.g., example 29) relates to a previous example (e.g., one of the examples 26 to 28) or to any other example, further comprising that the visualization control circuitry is configured to receive the second sensor data, wherein the second sensor data indicate a respective axle load of one or more axles of the vehicle, and wherein the visualization control circuitry is further configured to control the light emission of at least part of the one or more further lighting devices to indicate the respective axle load of the one or more axles of the vehicle.

Another example (e.g., example 30) relates to a previous example (e.g., example 29) or to any other example, further comprising that for indicating the respective axle load of the one or more axles of the vehicle, the visualization control circuitry is further configured to control a respective one of the one or more further lighting device for the respective axle to emit light with a respective light color selected based on the respective axle load, or control, based on the respective axle load, a respective lighting device of the one or more lighting devices for the respective axle with a plurality of selectively activatable light emitters to activate a number of successive ones of the light emitters, wherein the plurality of light emitters are arranged one after another, and wherein the number of activated light emitters depends on the respective axle load.

Another example (e.g., example 31) relates to a previous example (e.g., one of the examples 26 to 30) or to any other example, further comprising that the visualization control circuitry is configured to receive the first sensor data and the second sensor data, wherein the first sensor data indicate a weight of a load held by the crane, wherein the second sensor data indicate a respective axle load of multiple axles of the vehicle, and wherein the visualization control circuitry is further configured to determine a target unloading position for the load on a load space of the vehicle, and control the light emission of at least part of the one or more further lighting devices to indicate the target unloading position.

Another example (e.g., example 32) relates to a previous example (e.g., example 31) or to any other example, further comprising that for indicating the target unloading position, the visualization control circuitry is further configured to control one of the one or more further lighting devices closest to the target unloading position to emit light of a predefined light color.

An example (e.g., example 33) relates to a method for a crane for controlling status visualization, comprising receiving at least one of first sensor data of one or more sensors mounted to the crane and second sensor data of one or more sensors of a vehicle holding the crane, wherein one or more lighting devices for visualizing a status of at least one of the crane and the vehicle are mounted to the crane, and controlling light emission by the one or more lighting devices based on the at least one of the first sensor data and the second sensor data.

Another example (e.g., example 34) relates to a non-transitory machine-readable medium having stored thereon a program having a program code for performing the method according to a previous example (e.g., example 33) or to any other example, when the program is executed on a processor or a programmable hardware of the crane.

Another example (e.g., example 35) relates to a program having a program code for performing the method according to a previous example (e.g., example 33) or to any other example, when the program is executed on a processor or a programmable hardware of the crane.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), ASICs, integrated circuits (ICs) or SoCs programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A crane (100) comprising:
one or more lighting devices (120-1, ..., 120-6) for visualizing a status of at least one of the crane (100) and a vehicle holding the crane (100), wherein the one or more lighting devices (120-1, ..., 120-6) are mounted to the crane (100); and
visualization control circuitry (110) configured to:
receive at least one of first sensor data (101) of one or more sensors mounted to the crane (100) and second sensor data (102) of one or more sensors of the vehicle; and
control light emission by the one or more lighting devices (120-1, ..., 120-6) based on the at least one of the first sensor data (101) and the second sensor data (102).

2. The crane (100) of claim 1, wherein the visualization control circuitry (110) is configured to:
receive the first sensor data (101);
determine a status of a component of the crane (100) based on the first sensor data (101);
select at least one of the one or more lighting devices (120-1, ..., 120-6) for visualizing the status of the component; and
control the light emission of at least one of the one or more selected lighting devices (120-1, ..., 120-6) to indicate the status of the component.

3. The crane (100) of claim 2, wherein the at least one of the one or more lighting devices (120-1, ..., 120-6) is mounted to or in close proximity of the component whose status it visualizes.

4. The crane (100) of any one of claims 1 to 3, wherein the visualization control circuitry (110) is configured to receive the first sensor data (101), wherein the first sensor data (101) indicate an extension of an extendable crane arm (140) of the crane (100), and wherein the visualization control circuitry (110) is further configured to control the light emission of at least one of the one or more lighting devices (120-1, ..., 120-6) to indicate the extension of the crane arm or a remaining extension of the crane arm (140).

5. The crane (100) of any one of claims 1 to 4, wherein the crane (100) comprises a hydraulic cylinder configured to move a crane arm (140) of the crane (100) or a segment of the crane arm (140), wherein the visualization control circuitry (110) is configured to receive the first sensor data (101), wherein the first sensor data (101) indicate a pressure at the hydraulic cylinder (145, 146), and wherein the visualization control circuitry (110) is further configured to control the light emission of at least one of the one or more lighting devices (120-1, ..., 120-6) to indicate the pressure at the hydraulic cylinder (145, 146).

6. The crane (100) of any one of claims 1 to 5, wherein the crane (100) comprises a support leg (151) for selectively supporting the crane (100) against ground, wherein the support leg (151) comprises a hydraulic support cylinder (152), wherein the visualization control circuitry (110) is configured to receive the first sensor data (101), wherein the first sensor data (101) indicate a pressure at the hydraulic support cylinder (151), and wherein the visualization control circuitry (110) is further configured to control the light emission of at least one of the one or more lighting devices (120-1, ..., 120-6) to indicate the pressure at the hydraulic support cylinder (152).

7. The crane (100) of any one of claims 1 to 6, wherein the visualization control circuitry (110) is configured to receive the first sensor data (101), wherein the first sensor data (101) indicate a weight of a load (599) held by the crane (100), and wherein the visualization control circuitry (110) is further configured to:
determine a load factor of the crane (100); and
control the light emission of at least one of the one or more lighting devices (120-1, ..., 120-6) to indicate the load factor of the crane (100).

8. The crane (100) of any one of claims 1 to 7, wherein the crane (100) comprises a rope winch (160), wherein the visualization control circuitry (110) is configured to receive the first sensor data (101), wherein the first sensor data (101) indicate a length of the rope unwound from the rope winch (160), and wherein the visualization control circuitry (110) is further configured to control the light emission of at least one of the one or more lighting devices (120-1, ..., 120-6) to indicate the length of the rope unwound from the rope winch (160) or a remaining length of the rope not yet unwound from the rope winch (160).

9. The crane (100) of any one of claims 1 to 8, wherein the visualization control circuitry (110) is configured to receive the second sensor data (102) or third sensor data, wherein the second sensor data (102) indicate a remaining amount of fuel or electrical energy of the vehicle, wherein the third sensor data indicate a remaining amount of electrical energy of a power supply external to the crane (100), and wherein the visualization control circuitry (110) is further configured to control the light emission of at least one of the one or more lighting devices (120-1, ..., 120-6) to indicate the remaining amount of fuel or electrical energy of the vehicle or the remaining amount of electrical energy of the power supply.

10. The crane (100) of any one of claims 1 to 9, wherein at least one of the first sensor data (101) and the second sensor data (102) indicates presence of an object in a predetermined region of the crane (100)'s environment, and wherein the visualization control circuitry (110) is further configured to control the light emission of at least one of the one or more lighting devices (120-1, ..., 120-6) to indicate the presence of the object in the predetermined region of the crane (100)'s environment.

11. The crane (100) of any one of claims 1 to 10, wherein the visualization control circuitry (110) is further configured to:
receive operation status data (104) indicating execution of an autonomous or automatic function by the crane (100); and
control, based on the operation status data (104), the light emission of at least one of the one or more lighting devices (120-1, ..., 120-6) to indicate the execution of the autonomous or automatic function by the crane (100).

12. A vehicle (500) having mounted thereon a crane (100) according to any one of claims 1 to 11.

13. The vehicle (500) of claim 12, further comprising:
one or more further lighting devices (520-1, ..., 520-5) for visualizing a status of at least one of the crane (100) and the vehicle (500), wherein the one or more further lighting devices (520-1, ..., 520-5) are mounted on the outside of the vehicle (500),
wherein the visualization control circuitry (110) is further configured to control light emission by the one or more further lighting devices (520-1, ..., 520-5) based on the at least one of the first sensor data (101) and the second sensor data (102).

14. The vehicle (500) of claim 13, wherein the visualization control circuitry (110) is configured to:
receive the second sensor data (102);
determine a status of a component of the vehicle (500) based on the second sensor data (102);
select at least one of the one or more further lighting devices (520-1, ..., 520-5) for visualizing the status of the component of the vehicle (500); and
control the light emission of at least one of the one or more further lighting devices (520-1, ..., 520-5) to indicate the status of the component of the vehicle (500).

15. The vehicle (500) of claim 13 or claim 14, wherein the visualization control circuitry (110) is configured to receive the second sensor data (102), wherein the second sensor data (102) indicate a respective axle load of one or more axles of the vehicle (500), and wherein the visualization control circuitry (110) is further configured to control the light emission of at least part of the one or more further lighting devices (520-1, ..., 520-5) to indicate the respective axle load of the one or more axles of the vehicle (500).

## Amended claims

### Amended claims in accordance with Rule 137(2) EPC.

1. A crane (100) comprising:
one or more lighting devices (120-1, ..., 120-6) for visualizing a status of at least one of the crane (100) and a vehicle holding the crane (100), wherein the one or more lighting devices (120-1, ..., 120-6) are mounted to the crane (100); and
visualization control circuitry (110) configured to:
receive at least one of first sensor data (101) of one or more sensors mounted to the crane (100) and second sensor data (102) of one or more sensors of the vehicle;
control light emission by the one or more lighting devices (120-1, ..., 120-6) based on the at least one of the first sensor data (101) and the second sensor data (102);
receive operation status data (104) indicating execution of an autonomous or automatic function by the crane (100); and
control, based on the operation status data (104), the light emission of at least one of the one or more lighting devices (120-1, ..., 120-6) to indicate the execution of the autonomous or automatic function by the crane (100).

2. The crane (100) of claim 1, wherein the visualization control circuitry (110) is configured to:
receive the first sensor data (101);
determine a status of a component of the crane (100) based on the first sensor data (101);
select at least one of the one or more lighting devices (120-1, ..., 120-6) for visualizing the status of the component; and
control the light emission of at least one of the one or more selected lighting devices (120-1, ..., 120-6) to indicate the status of the component.

3. The crane (100) of claim 2, wherein the at least one of the one or more lighting devices (120-1, ..., 120-6) is mounted to or in close proximity of the component whose status it visualizes.

4. The crane (100) of any one of claims 1 to 3, wherein the visualization control circuitry (110) is configured to receive the first sensor data (101), wherein the first sensor data (101) indicate an extension of an extendable crane arm (140) of the crane (100), and wherein the visualization control circuitry (110) is further configured to control the light emission of at least one of the one or more lighting devices (120-1, ..., 120-6) to indicate the extension of the crane arm or a remaining extension of the crane arm (140).

5. The crane (100) of any one of claims 1 to 4, wherein the crane (100) comprises a hydraulic cylinder configured to move a crane arm (140) of the crane (100) or a segment of the crane arm (140), wherein the visualization control circuitry (110) is configured to receive the first sensor data (101), wherein the first sensor data (101) indicate a pressure at the hydraulic cylinder (145, 146), and wherein the visualization control circuitry (110) is further configured to control the light emission of at least one of the one or more lighting devices (120-1, ..., 120-6) to indicate the pressure at the hydraulic cylinder (145, 146).

6. The crane (100) of any one of claims 1 to 5, wherein the crane (100) comprises a support leg (151) for selectively supporting the crane (100) against ground, wherein the support leg (151) comprises a hydraulic support cylinder (152), wherein the visualization control circuitry (110) is configured to receive the first sensor data (101), wherein the first sensor data (101) indicate a pressure at the hydraulic support cylinder (151), and wherein the visualization control circuitry (110) is further configured to control the light emission of at least one of the one or more lighting devices (120-1, ..., 120-6) to indicate the pressure at the hydraulic support cylinder (152).

7. The crane (100) of any one of claims 1 to 6, wherein the visualization control circuitry (110) is configured to receive the first sensor data (101), wherein the first sensor data (101) indicate a weight of a load (599) held by the crane (100), and wherein the visualization control circuitry (110) is further configured to:
determine a load factor of the crane (100); and
control the light emission of at least one of the one or more lighting devices (120-1, ..., 120-6) to indicate the load factor of the crane (100).

8. The crane (100) of any one of claims 1 to 7, wherein the crane (100) comprises a rope winch (160), wherein the visualization control circuitry (110) is configured to receive the first sensor data (101), wherein the first sensor data (101) indicate a length of the rope unwound from the rope winch (160), and wherein the visualization control circuitry (110) is further configured to control the light emission of at least one of the one or more lighting devices (120-1, ..., 120-6) to indicate the length of the rope unwound from the rope winch (160) or a remaining length of the rope not yet unwound from the rope winch (160).

9. The crane (100) of any one of claims 1 to 8, wherein the visualization control circuitry (110) is configured to receive the second sensor data (102) or third sensor data, wherein the second sensor data (102) indicate a remaining amount of fuel or electrical energy of the vehicle, wherein the third sensor data indicate a remaining amount of electrical energy of a power supply external to the crane (100), and wherein the visualization control circuitry (110) is further configured to control the light emission of at least one of the one or more lighting devices (120-1, ..., 120-6) to indicate the remaining amount of fuel or electrical energy of the vehicle or the remaining amount of electrical energy of the power supply.

10. The crane (100) of any one of claims 1 to 9, wherein at least one of the first sensor data (101) and the second sensor data (102) indicates presence of an object in a predetermined region of the crane (100)'s environment, and wherein the visualization control circuitry (110) is further configured to control the light emission of at least one of the one or more lighting devices (120-1, ..., 120-6) to indicate the presence of the object in the predetermined region of the crane (100)'s environment.

11. A vehicle (500) having mounted thereon a crane (100) according to any one of claims 1 to 10.

12. The vehicle (500) of claim 11, further comprising:
one or more further lighting devices (520-1, ..., 520-5) for visualizing a status of at least one of the crane (100) and the vehicle (500), wherein the one or more further lighting devices (520-1, ..., 520-5) are mounted on the outside of the vehicle (500),
wherein the visualization control circuitry (110) is further configured to control light emission by the one or more further lighting devices (520-1, ..., 520-5) based on the at least one of the first sensor data (101) and the second sensor data (102).

13. The vehicle (500) of claim 12, wherein the visualization control circuitry (110) is configured to:
receive the second sensor data (102);
determine a status of a component of the vehicle (500) based on the second sensor data (102);
select at least one of the one or more further lighting devices (520-1, ..., 520-5) for visualizing the status of the component of the vehicle (500); and
control the light emission of at least one of the one or more further lighting devices (520-1, ..., 520-5) to indicate the status of the component of the vehicle (500).

14. The vehicle (500) of claim 12 or claim 13, wherein the visualization control circuitry (110) is configured to receive the second sensor data (102), wherein the second sensor data (102) indicate a respective axle load of one or more axles of the vehicle (500), and wherein the visualization control circuitry (110) is further configured to control the light emission of at least part of the one or more further lighting devices (520-1, ..., 520-5) to indicate the respective axle load of the one or more axles of the vehicle (500).

15. A method (600) for a crane for controlling status visualization, comprising:
receiving (602) at least one of first sensor data of one or more sensors mounted to the crane and second sensor data of one or more sensors of a vehicle holding the crane, wherein one or more lighting devices for visualizing a status of at least one of the crane and the vehicle are mounted to the crane;
controlling (604) light emission by the one or more lighting devices based on the at least one of the first sensor data and the second sensor data;
receiving operation status data indicating execution of an autonomous or automatic function by the crane; and
controlling, based on the operation status data, the light emission of at least one of the one or more lighting devices to indicate the execution of the autonomous or automatic function by the crane.
